# EUROPÄISCHE PATENTSCHRIFT

(11) **EP 3 718 376 B1**
(45) Veröffentlichungstag und Bekanntmachung des Hinweises auf die Patenterteilung: **06.07.2022**
(21) Anmeldenummer: 18822144.4
(22) Anmeldetag: 22.11.2018
(51) Int. Cl.: H05B 6/06

(54) **GARSYSTEM**
COOKING SYSTEM
SYSTÈME DE CUISSON

(30) Priorität: 28.11.2017 ES 201731365
(43) Veröffentlichungstag der Anmeldung: 07.10.2020
(73) Patentinhaber: BSH Hausgeräte GmbH, 81739 München (DE)
(72) Erfinder: FRANCO GUTIERREZ, Carlos, 50017 Zaragoza (ES); MARZO ALVAREZ, Teresa Del Carmen, 50006 Zaragoza (ES); PAESA GARCIA, David, 50015 Zaragoza (ES); PARRA BORDERÍAS, Maria, 50006 Zaragoza (ES); RODRIGUEZ LARROSA, Agostina, 50011 Zaragoza (ES); VILLANUEVA VALERO, Beatriz, 50011 Zaragoza (ES)
(86) Internationale Anmeldenummer: PCT/IB2018/059201
(87) Internationale Veröffentlichungsnummer: WO 2019/106494

(56) Entgegenhaltungen:
- EP-A1- 2 827 680
- EP-A2- 2 772 692
- DE-A1-102014 216 709
- US-A- 5 746 114

## Beschreibung

Die Erfindung betrifft ein Garsystem nach dem Oberbegriff des Anspruchs 1 und ein Verfahren zu einem Betrieb eines Garsystems nach dem Oberbegriff des Anspruchs 13.

Aus dem Stand der Technik ist bereits ein Garsystem mit einem Kontaktmodul bekannt, welches in einem Betriebszustand an einer Seitenwand eines Gargeschirrs angeordnet ist. Das Kontaktmodul weist eine Temperaturerfassungseinheit auf, welche in einem Betriebszustand einen Temperaturparameter des Gargeschirrs detektiert. Eine Gargeräte-Steuereinheit eines als Kochfeld ausgebildeten Gargeräts regelt in dem Betriebszustand eine Energiezufuhr zu einer das Gargeschirr beheizenden Heizeinheit in Abhängigkeit von dem Temperaturparameter. Bei einer unsachgemäßen Positionierung des Kontaktmoduls an dem Gargeschirr kann es zu einer fehlerhaften Detektion des Temperaturparameters kommen, woraus eine unangebrachte Beheizung des Gargeschirrs und damit insbesondere ein Sicherheitsrisiko für einen Bediener resultieren könnten. Zusätzlich zu dem Sicherheitsrisiko für einen Bediener kann es zu einem fehlerhaften Garergebnis kommen, beispielsweise zu einem Überkochen oder zu einem Anbrennen von Gargut.

Die Druckschrift DE 10 2014 216709 A1 offenbart ein Garsystem nach dem Oberbegriff des Anspruchs 1 und ein Verfahren zu einem Betrieb eines Garsystems nach dem Oberbegriff des Anspruchs 13.Die Aufgabe der Erfindung besteht insbesondere darin, ein gattungsgemäßes System mit verbesserten Eigenschaften hinsichtlich eines Bedienkomforts bereitzustellen. Die Aufgabe wird durch die Merkmale der Ansprüche 1 und 13 gelöst, während vorteilhafte Ausgestaltungen und Weiterbildungen der Erfindung den Unteransprüchen entnommen werden können.

Die Erfindung geht aus von einem Garsystem mit zumindest einem Kontaktmodul, welches insbesondere als ein Sensormodul ausgebildet ist und welches zu einer Anordnung, insbesondere zu einer Befestigung, an zumindest einem Gargeschirr vorgesehen ist.

Es wird vorgeschlagen, dass das Garsystem zumindest eine Positionierungserfassungseinheit aufweist, welche dazu vorgesehen ist, eine ordnungsgemäße Positionierung des Kontaktmoduls an dem Gargeschirr zu überprüfen, wobei die Positionierungserfassungseinheit dazu vorgesehen ist, im Fall einer Detektion einer Abweichung der Position des Kontaktmoduls von einer Sollposition zumindest eine Sicherheitsmaßnahme einzuleiten.

Durch die erfindungsgemäße Ausgestaltung kann insbesondere ein hoher Bedienkomfort erreicht werden, und zwar insbesondere in Bezug auf eine hohe Sicherheit für den Bediener und/oder in Bezug auf optimale Garergebnisse. Insbesondere kann eine ordnungsgemäße Positionierung des Kontaktmoduls an dem Gargeschirr sichergestellt werden, wodurch insbesondere eine hohe Sicherheit und/oder ein optimales Garergebnis erzielt werden kann, da insbesondere im Fall einer Abweichung des Kontaktmoduls von einer Sollposition eine

Übermittlung zumindest einer fehlerhaften Information von dem Kontaktmodul an zumindest eine Gargeräte-Steuereinheit erfolgen könnte, woraufhin insbesondere schlechte Garergebnisse und/oder ein hohes Sicherheitsrisiko resultieren könnte. Es kann insbesondere ein Fall vermieden werden, in welchem eine Gargeräte-Steuereinheit das Gargeschirr aufgrund zumindest einer fehlerhaften Information, wie beispielsweise einer fehlerhaften Temperatur des Gargeschirrs, weiter beheizt, obwohl eine Beheizung unnötig wäre, wodurch insbesondere eine hohe Sicherheit und/oder ein optimales Garergebnis erzielt werden kann.

Unter einem "Garsystem" soll insbesondere ein System verstanden werden, welches zumindest ein Gargerät aufweist, das zu einem Garen von Lebensmitteln vorgesehen ist, wie beispielsweise ein Backofen und/oder ein Kochfeld und/oder eine Mikrowelle, und welches insbesondere zusätzlich zumindest eine weitere Baueinheit aufweisen könnte, die von einem Gargerät verschieden ausgebildet ist, wie insbesondere ein Reinigungsgerät und/oder ein Kältegerät und/oder ein Mobilgerät und/oder zumindest ein Kontaktmodul. Insbesondere ist das Garsystem dazu vorgesehen, zumindest eine Baueinheit aufzuweisen, welche zu einer Anordnung in einer Küche vorgesehen ist. Das Garsystem könnte beispielsweise zumindest eine Zubehöreinheit für das Gargerät aufweisen, wie beispielsweise eine Sensoreinheit zur externen Messung einer Temperatur eines Gargeschirrs und/oder eines Garguts. Das Garsystem könnte insbesondere zumindest ein Gargeschirr, insbesondere das Gargeschirr, aufweisen, an welchem das Kontaktmodul in wenigstens einem Betriebszustand angeordnet sein könnte.

Insbesondere weist das Garsystem zumindest eine Aufstellplatte auf, welche insbesondere zu einem Aufstellen des Gargeschirrs vorgesehen ist. Unter einer "Aufstellplatte" soll insbesondere zumindest eine insbesondere plattenartige Einheit verstanden werden, welche zu einem Aufstellen wenigstens eines Gargeschirrs und/oder zu einem Auflegen wenigstens eines Garguts zum Zweck der Beheizung vorgesehen ist. Die Aufstellplatte könnte beispielsweise als ein Teilbereich zumindest einer Arbeitsplatte, insbesondere zumindest einer Küchenarbeitsplatte, insbesondere des Garsystems, ausgebildet sein. Alternativ oder zusätzlich könnte die Aufstellplatte als eine Kochfeldplatte ausgebildet sein. Die als Kochfeldplatte ausgebildete Aufstellplatte könnte insbesondere zumindest einen Teil eines Kochfeldaußengehäuses ausbilden und insbesondere gemeinsam mit zumindest einer Außengehäuseeinheit, mit welcher die als Kochfeldplatte ausgebildete Aufstellplatte in wenigstens einem montierten Zustand insbesondere verbunden sein könnte, das Kochfeldaußengehäuse wenigstens zu einem Großteil ausbilden. Die Aufstellplatte könnte beispielsweise wenigstens zu einem Großteil aus Glas und/oder aus Glaskeramik und/oder aus Neolith und/oder aus Dekton und/oder aus Holz und/oder aus Marmor und/oder aus Stein, insbesondere aus Naturstein, und/oder aus Schichtstoff und/oder aus Metall und/oder aus Kunststoff und/oder aus Keramik gebildet sein. Unter "wenigstens zu einem Großteil" soll insbesondere zu einem Anteil, insbesondere einem Massenanteil und/oder Volumenanteil, von mindestens 70 %, insbesondere von mindestens 80 %, vorteilhaft von mindestens 90 % und vorzugsweise von mindestens 95 % verstanden werden.

Unter einem "Kontaktmodul" soll insbesondere eine Einheit verstanden werden, welche dazu vorgesehen ist, zumindest in einem Betriebszustand abnehmbar, insbesondere wiederverwendbar, an dem Gargeschirr angeordnet zu sein. Insbesondere könnte das Kontaktmodul wenigstens zu einem Großteil aus Kunststoff, insbesondere aus Kunststoff mit geringer Wärmeleitfähigkeit, ausgebildet sein. Beispielsweise könnte das Kontaktmodul wenigstens zu einem Großteil aus Silikon mit geringer Wärmeleitfähigkeit ausgebildet sein. Insbesondere könnte das Kontaktmodul bei einer senkrechten Betrachtung auf eine Haupterstreckungsebene des Kontaktmoduls ovalförmig, beispielsweise ellipsenförmig und vorteilhaft kreisförmig, ausgebildet sein. Insbesondere weist das Kontaktmodul eine Dicke von maximal 40 mm, insbesondere von maximal 30 mm und vorteilhaft von maximal 20 mm auf. Insbesondere weist das Kontaktmodul bei einer senkrechten Betrachtung auf eine Haupterstreckungsebene des Kontaktmoduls einen Durchmesser von maximal 40 mm, insbesondere von maximal 35 mm und vorteilhaft von maximal 30 mm auf. Insbesondere weist das Kontaktmodul bei einer senkrechten Betrachtung auf eine Haupterstreckungsebene des Kontaktmoduls einen Durchmesser von mindestens 5 mm, insbesondere von mindestens 7 mm und vorteilhaft von mindestens 10 mm auf. Unter einer "geringen" Wärmeleitfähigkeit soll insbesondere eine Wärmeleitfähigkeit mit einem Wert von maximal 10 W/(m•K), insbesondere von maximal 1 W/(m•K), vorteilhaft von weniger als 0,5 W/(m•K), besonders vorteilhaft von maximal 0,2 W/(m•K), vorzugsweise von maximal 0,1 W/(m•K) verstanden werden.

Unter "wenigstens zu einem Großteil" soll insbesondere zu einem Anteil, insbesondere einem Massenanteil und/oder Volumenanteil, von mindestens 70 %, insbesondere von mindestens 80 %, vorteilhaft von mindestens 90 % und vorzugsweise von mindestens 95 % verstanden werden. Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft. Unter einer "Dicke" eines Objekts soll insbesondere eine kürzeste Erstreckung eines kleinsten gedachten geometrischen Quaders verstanden werden, welcher das Objekt gerade noch umgibt.

Unter der Wendung, dass das Kontaktmodul zu einer "Anordnung an zumindest einem Gargeschirr" vorgesehen ist, soll insbesondere verstanden werden, dass das Kontaktmodul in wenigstens einem Betriebszustand an zumindest einer Wand, insbesondere einer Seitenwand, des Gargeschirrs und/oder an zumindest einem Deckel des Gargeschirrs und/oder innerhalb des Gargeschirrs angeordnet ist. Insbesondere ist das an der Wand des Gargeschirrs und/oder an dem Deckel angeordnete Kontaktmodul in einem direkten Kontakt mit dem Gargeschirr, insbesondere mit der Seitenwand, angeordnet. Beispielsweise könnte das Kontaktmodul mit zumindest einem Ansaugelement, zumindest einer mechanischen Verbindung mit dem Gargeschirr und/oder mit zumindest einem Magneten in einem direkten Kontakt mit dem Gargeschirr angeordnet sein. Insbesondere ist das innerhalb des Gargeschirrs angeordnete Kontaktmodul in einem von dem Gargeschirr ausgebildeten Garraum angeordnet und insbesondere auf zumindest einer Ebene über einen Winkelbereich von mindestens 180°, vorteilhaft von mindestens 270° und bevorzugt von mindestens 330° von dem Gargeschirr umgeben.

Unter einer "Positionierungserfassungseinheit" soll insbesondere eine Einheit verstanden werden, welche zumindest eine Sensoreinheit aufweist, die in wenigstens einem Betriebszustand zumindest einen Positionierungsparameter detektiert, und welche insbesondere zumindest eine Steuereinheit aufweist, die in dem Betriebszustand in Abhängigkeit des Positionierungsparameters eine Positionierung des Kontaktmoduls an dem Gargeschirr überprüft. Unter einer "Sensoreinheit" soll insbesondere eine Einheit verstanden werden, welche zumindest einen Sensor und/oder Detektor zu einer Detektion des Positionierungsparameters aufweist und welche dazu vorgesehen ist, einen den Positionierungsparameter kennzeichnenden Wert auszugeben, wobei es sich bei dem Positionierungsparameter vorteilhaft um eine physikalische und/oder chemische Größe handelt. Unter "detektieren" soll insbesondere messen und/oder ermitteln verstanden werden.

Unter einer "Steuereinheit" soll insbesondere eine elektronische Einheit verstanden werden, die vorzugsweise dazu vorgesehen ist, zumindest die Sensoreinheit zu steuern und/oder zu regeln. Beispielsweise könnte die Steuereinheit in einer Steuer- und/oder Regeleinheit eines Gargeräts, insbesondere eines Kochfelds und vorteilhaft eines Induktionskochfelds, wenigstens teilweise integriert sein und vorzugsweise dazu vorgesehen sein, zumindest eine Heizeinheit insbesondere des Gargeräts zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. In wenigstens einem Betriebszustand kommunizieren die Steuereinheit und die Sensoreinheit insbesondere drahtlos, beispielsweise mittels Bluetooth und/oder mittels Funk und/oder mittels eines drahtlosen Netzwerks, miteinander.

Unter der Wendung, dass die Positionierungserfassungseinheit dazu vorgesehen ist, eine ordnungsgemäße Positionierung des Kontaktmoduls an dem Gargeschirr "zu überprüfen", soll insbesondere verstanden werden, dass die Positionierungserfassungseinheit eine aktuelle Positionierung des Kontaktmoduls relativ zu dem Gargeschirr ermittelt und die ermittelte Positionierung mit zumindest einer Sollpositionierung des Kontaktmoduls relativ zu dem Gargeschirr vergleicht. Die Steuereinheit könnte insbesondere in wenigstens einem Betriebszustand insbesondere in Abhängigkeit von dem Positionierungsparameter eine aktuelle Position des Kontaktmoduls ermitteln und insbesondere die aktuelle Position des Kontaktmoduls mit einer Sollposition des Kontaktmoduls vergleichen. Alternativ oder zusätzlich könnte die Steuereinheit in wenigstens einem Betriebszustand eine Abweichung des von der Sensoreinheit an die Steuereinheit übermittelten Positionierungsparameters von zumindest einem zu erwartenden Kontrollparameter und/oder von zumindest einem zu erwartenden Referenzwert für den Positionierungsparameter ermitteln und insbesondere daraus eine Positionierung des Kontaktmoduls an dem Gargeschirr ermitteln und/oder auf eine Positionierung des Kontaktmoduls an dem Gargeschirr schließen.

Unter einer "Positionierung" des Kontaktmoduls an dem Gargeschirr soll insbesondere eine Orientierung des Kontaktmoduls relativ zu dem Gargeschirr und/oder eine Position des Kontaktmoduls an dem Gargeschirr und/oder eine Lage des Kontaktmoduls relativ zu dem Gargeschirr verstanden werden. Unter einer "ordnungsgemäßen Positionierung des Kontaktmoduls an dem Gargeschirr" soll insbesondere eine ordnungsgemäße Positionierung des gesamten Kontaktmoduls an dem Gargeschirr und/oder eine ordnungsgemäße Positionierung zumindest eines Kontaktmodulelements des Kontaktmoduls an dem Gargeschirr und/oder eine ordnungsgemäße Positionierung zumindest eines ersten Kontaktmodulelements des Kontaktmoduls relativ zu einem an dem Gargeschirr angeordneten zweiten Kontaktmodulelement des Kontaktmoduls verstanden werden.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Beispielsweise könnte die Sensoreinheit der Positionierungserfassungseinheit wenigstens zu einem Großteil außerhalb des Kontaktmoduls angeordnet sein, beispielsweise in einer Dunstabzugshaube und/oder in zumindest einem Dom, welcher sich insbesondere oberhalb einer Kochfeldplatte eines Kochfelds befinden könnte. Vorzugsweise weist die Positionierungserfassungseinheit zumindest eine Sensoreinheit auf, welche wenigstens teilweise Teil des Kontaktmoduls ist und welche dazu vorgesehen ist, zumindest einen Positionierungsparameter zu detektieren. Unter der Wendung, dass ein erstes Objekt "wenigstens teilweise" Teil eines zweiten Objekts ist, soll insbesondere verstanden werden, dass das erste Objekt zumindest einen Teilbereich, insbesondere zumindest ein Element und/oder zumindest eine Einheit, aufweist, welcher Teil des zweiten Objekts ist und insbesondere zusätzlich zu dem Teilbereich zumindest einen weiteren Teilbereich aufweisen könnte, welcher insbesondere Teil zumindest eines von dem zweiten Objekt verschiedenen dritten Objekts sein könnte. Die Sensoreinheit ist in wenigstens einem Betriebszustand insbesondere wenigstens zu einem Großteil in dem Kontaktmodul integriert. Dadurch kann insbesondere auf eine weitere Einheit zu einer Lagerung und/oder zu einer Integration der Sensoreinheit verzichtet werden, wodurch insbesondre eine geringe Bauteilevielfalt und/oder eine geringe Lagerhaltung und/oder eine kompakte Ausgestaltung erzielt werden kann.

Zudem wird vorgeschlagen, dass die Sensoreinheit zumindest einen Temperatursensor aufweist, welcher dazu vorgesehen ist, zumindest einen Positionierungsteilparameter des Positionierungsparameters zu detektieren. Unter einem "Positionierungsteilparameter" des Positionierungsparameters soll insbesondere zumindest ein Teil des Positionierungsparameters verstanden werden. Beispielsweise könnte der Positionierungsparameter genau einen Positionierungsteilparameter aufweisen, welcher insbesondere identisch mit dem Positionierungsparameter sein könnte. Alternativ oder zusätzlich könnte der Positionierungsparameter zumindest zwei, insbesondere zumindest drei, voreilhaft zumindest vier, vorzugsweise zumindest fünf und besonders bevorzugt mehrere Positionierungsteilparameter aufweisen. Unter einem "Temperatursensor" soll insbesondere ein Sensor verstanden werden, welcher in wenigstens einem Betriebszustand zumindest einen eine Temperatur kennzeichnenden Parameter detektiert. Der Temperatursensor könnte beispielsweise ein Widerstandssensor, wie beispielsweise ein Heißleiter und/oder ein Kaltleiter, und/oder ein Kontaktsensor und/oder ein Infrarot-Sensor sein. Der insbesondere von dem Temperatursensor detektierte Positionierungsteilparameter könnte insbesondere eine Gartemperatur charakterisieren und/oder sein. Der insbesondere von dem Temperatursensor detektierte Positionierungsteilparameter könnte insbesondere zumindest eine Temperatur des Gargeschirrs und/oder zumindest eine Temperatur wenigstens eines in dem Gargeschirr befindlichen Garguts und/oder zumindest eine Temperatur des Kontaktmoduls, insbesondere zumindest eines Kontaktmodulelements des Kontaktmoduls, charakterisieren und/oder sein. Dadurch kann insbesondere ein hoher Komfort erreicht werden. Insbesondere kann eine Überprüfung einer ordnungsgemäßen Positionierung des Kontaktmoduls an dem Gargeschirr anhand eines Parameters erfolgen, welcher insbesondere zusätzlich bei einem Garvorgang insbesondere zu einer Ermittlung einer Temperatur des Gargeschirrs herangezogen werden kann, wodurch insbesondere eine geringe Bauteilevielfalt und/oder geringe Kosten ermöglicht werden können.

Weiterhin wird vorgeschlagen, dass die Sensoreinheit zumindest einen Bewegungssensor aufweist, welcher dazu vorgesehen ist, zumindest einen Positionierungsteilparameter des Positionierungsparameters zu detektieren. Unter einem "Bewegungssensor" soll insbesondere ein Sensor verstanden werden, welcher in wenigstens einem Betriebszustand eine Änderung zumindest einer Lage eines Objekts und/oder zumindest einer Position eines Objekts detektiert. Beispielsweise könnte der Bewegungssensor ein Bewegungsmelder und/oder ein Neigungsschalter und/oder ein Ultraschallsensor und/oder ein Ortungssystem sein. Vorteilhaft ist der Bewegungssensor ein Beschleunigungssensor. Der insbesondere von dem Bewegungssensor detektierte Positionierungsteilparameter könnte insbesondere zumindest eine Bewegung insbesondere zumindest eines Kontaktmodulelements des Kontaktmoduls und/oder zumindest eine Beschleunigung insbesondere zumindest eines Kontaktmodulelements des Kontaktmoduls und/oder zumindest eine, insbesondere auf zumindest ein Kontaktmodulelement des Kontaktmoduls, einwirkende Beschleunigungskraft und/oder zumindest eine Lage insbesondere zumindest eines Kontaktmodulelements des Kontaktmoduls vorteilhaft relativ zu dem Gargeschirr und/oder zumindest eine Position insbesondere zumindest eines Kontaktmodulelements des Kontaktmoduls charakterisieren und/oder sein. Dadurch kann insbesondere ein ungewolltes Lösen des Kontaktmoduls von dem Gargeschirr, insbesondere von einer Sollpositionierung des Kontaktmoduls an dem Gargeschirr, schnell und/oder präzise erkannt werden. Insbesondere kann eine hohe Sicherheit ermöglicht werden. Der Bewegungssensor kann insbesondere einfach in dem Kontaktmodul integriert werden, und zwar insbesondere aufgrund von geringen Abmessungen des Bewegungssensors. Insbesondere kann eine preisgünstige Ausgestaltung erzielt werden, und zwar insbesondere aufgrund eines geringen Preises des Bewegungssensors. Insbesondere kann eine zuverlässige und/oder robuste Überprüfung einer ordnungsgemäßen Positionierung des Kontaktmoduls an dem Gargeschirr vorgenommen werden. Mittels des Bewegungssensors kann insbesondere eine Bewegung des Kontaktmoduls und/oder eine relative Winkelorientierung des Kontaktmoduls sicher und/oder zuverlässig detektiert werden.

Ferner wird vorgeschlagen, dass die Sensoreinheit zumindest einen magnetischen Sensor aufweist, welcher dazu vorgesehen ist, zumindest einen Positionierungsteilparameter des Positionierungsparameters zu detektieren. Unter einem "magnetischen" Sensor soll insbesondere ein Sensor verstanden werden, welcher in wenigstens einem Betriebszustand den Positionierungsteilparameter auf Basis zumindest einer magnetischen Kraft und/oder auf Basis zumindest eines magnetischen Signals detektiert. Beispielsweise könnte der magnetische Sensor ein galvanomagnetischer Sensor sein, wie beispielsweise ein Hall-Sensor. Alternativ oder zusätzlich könnte der magnetische Sensor ein magneto-resistiver Sensor sein, wie beispielsweise ein Thomson-Sensor und/oder ein Wiegand-Sensor und/oder ein anisotroper magneto-resistiver Sensor, insbesondere ein Anisotropie-Sensor, und/oder ein gigantischer magneto-resistiver Sensor und/oder ein colossaler magneto-resistiver Sensor und/oder ein Tunnel-magneto-resistiver Sensor. Der Sensor könnte alternativ oder zusätzlich ein magneto-optischer Sensor sein, wie beispielsweise ein Voigt-Sensor und/oder ein Cotton-Mouton-Sensor und/oder ein magneto-optischer Kerr-Effekt-Sensor und/oder ein Faraday'scher Sensor und/oder ein Zeeman-Effekt-Sensor. Alternativ oder zusätzlich könnte der magnetische Sensor ein Reedschalter sein. Der insbesondere von dem magnetischen Sensor detektierte Positionierungsteilparameter könnte insbesondere zumindest eine Änderung zumindest eines Magnetfelds und/oder zumindest eines magnetisches Flusses und/oder zumindest einer magnetischen Kraft charakterisieren und/oder sein. Dadurch kann insbesondere eine zuverlässige Überprüfung der ordnungsgemäßen Positionierung des Kontaktmoduls an dem Gargeschirr vorgenommen werden. Insbesondere kann eine vorhandene Konstruktion des Kontaktmoduls und/oder ein vorhandener Aufbau des Kontaktmoduls, bei welchem das Kontaktmodul insbesondere zumindest ein erstes Kontaktmodulelement und zumindest ein zweites Kontaktmodulelement aufweist, welche in wenigstens einem Betriebszustand mittels Magnetkraft miteinander verbunden sind, ausgenutzt werden, um die ordnungsgemäße Positionierung des Kontaktmoduls an dem Gargeschirr zu überprüfen, wodurch insbesondere geringe Kosten ermöglicht werden können.

Beispielsweise könnte die Sensoreinheit zumindest einen induktiven Sensor aufweisen, welcher dazu vorgesehen ist, zumindest einen Positionierungsteilparameter des Positionierungsparameters zu detektieren. Vorzugsweise weist die Sensoreinheit zumindest einen kapazitiven Sensor auf, welcher dazu vorgesehen ist, zumindest einen Positionierungsteilparameter des Positionierungsparameters zu detektieren. Unter einem "kapazitiven" Sensor soll insbesondere ein Sensor verstanden werden, welcher in wenigstens einem Betriebszustand den Positionierungsteilparameter auf Basis zumindest einer Veränderung einer elektrischen Kapazität zumindest eines Kondensators, insbesondere genau eines insbesondere einzigen Kondensators oder zumindest zweier Kondensatoren, detektiert. Der insbesondere von dem kapazitiven Sensor detektierte Positionierungsteilparameter könnte insbesondere zumindest eine Änderung einer elektrischen Kapazität zumindest eines Kondensators charakterisieren und/oder sein. Dadurch kann insbesondere ein hoher Bedienkomfort erzielt werden. Insbesondere kann eine platzsparende und/oder preisgünstige Ausgestaltung erreicht werden.

Weiterhin wird vorgeschlagen, dass die Sensoreinheit zumindest einen Funksensor, insbesondere zumindest einen Funkempfänger, aufweist, welcher dazu vorgesehen ist, zumindest einen Positionierungsteilparameter des Positionierungsparameters zu detektieren. Unter einem "Funksensor" soll insbesondere ein Sensor verstanden werden, welcher in wenigstens einem Betriebszustand den Positionierungsteilparameter auf Basis zumindest eines elektromagnetischen Signals detektiert. Beispielsweise könnte der Funksensor ein RFID-Sensor und/oder ein Bluetooth-Sensor sein. Der insbesondere von dem Funksensor detektierte Positionierungsteilparameter könnte insbesondere zumindest ein Funksignal, wie beispielsweise zumindest ein hörbares Signal und/oder zumindest ein sichtbares Signal und/oder zumindest ein digitales Signal und/oder zumindest ein optisches Signal und/oder zumindest ein akustisches Signal charakterisieren und/oder sein. Insbesondere könnte in dem Funksensor, welcher insbesondere ein RFID-Sensor sein könnte, zumindest eine weitere Information gespeichert sein. Die weitere Information könnte beispielsweise eine Größe des Gargeschirrs und/oder eine Art des Gargeschirrs sein. Dadurch kann insbesondere die ordnungsgemäße Positionierung des Kontaktmoduls an dem Gargeschirr zuverlässig überprüft werden.

Die Sensoreinheit könnte genau einen magnetischen Sensor oder ausschließlich den kapazitiven Sensor oder ausschließlich den Funksensor aufweisen.

Zusätzlich könnte die Sensoreinheit insbesondere zumindest ein, zwei, vorteilhaft zumindest drei, besonders vorteilhaft zumindest vier und vorzugsweise zumindest fünf Sensoren aufweisen, wie beispielsweise den Temperatursensor und/oder den Bewegungssensor und/oder den induktiven Sensor und/oder den magnetischen Sensor und/oder den kapazitiven Sensor und/oder den Funksensor.

Weist die Sensoreinheit zumindest den magnetischen Sensor und/oder den kapazitiven Sensor und/oder den Funksensor auf, kann insbesondere sowohl eine Änderung in einer Positionierung des Kontaktmoduls an dem Gargeschirr als auch eine ordnungsgemäße Positionierung des Kontaktmoduls an dem Gargeschirr detektiert werden, und zwar unabhängig von einer Aktivierung des Kontaktmoduls und vorteilhaft vor einem Beginn eines Garvorgangs und/oder Heizvorgangs. Die Positionierungserfassungseinheit, insbesondere die Steuereinheit der Positionierungserfassungseinheit, ist dazu vorgesehen, im Fall einer Detektion einer Abweichung der Position des Kontaktmoduls von einer Sollposition zumindest eine Sicherheitsmaßnahme einzuleiten, kann, insbesondere zusätzlich, im Fall einer Abweichung von einer ordnungsgemäßen Positionierung des Kontaktmoduls an dem Gargeschirr insbesondere eine Beheizung des Gargeschirrs unterbunden und damit insbesondere eine hohe Sicherheit gewährleistet werden, und zwar unabhängig von einer Aktivierung des Kontaktmoduls und vorteilhaft vor einem Beginn eines Garvorgangs und/oder Heizvorgangs. Insbesondere kann eine hohe Zuverlässigkeit bei einer Überprüfung einer ordnungsgemäßen Positionierung des Kontaktmoduls an dem Gargeschirr erzielt werden, wodurch insbesondere unerwünschte Garzustände, wie beispielsweise ein Überkochen, und/oder gefährliche Situationen, wie beispielsweise ein Überdruck, insbesondere im Fall eines als Druckkochtopf ausgebildeten Gargeschirrs, vermieden werden können.

Beispielsweise könnte die Positionierungserfassungseinheit insbesondere ausschließlich die Sensoreinheit aufweisen. Vorzugsweise weist die Positionierungserfassungseinheit zumindest eine weitere Sensoreinheit auf, welche dazu vorgesehen ist, zumindest einen Kontrollparameter zu einer Überprüfung des Positionierungsparameters zu detektieren. Beispielsweise könnten die Sensoreinheit und die weitere Sensoreinheit wenigstens teilweise einstückig ausgebildet sein. Insbesondere sind die Sensoreinheit und die weitere Sensoreinheit voneinander verschieden und insbesondere getrennt voneinander ausgebildet. Die Positionierungserfassungseinheit vergleicht insbesondere den Kontrollparameter mit zumindest einem Referenzwert für den Kontrollparameter, welcher insbesondere in einer Speichereinheit der Positionierungserfassungseinheit gespeichert sein könnte und welcher insbesondere einen zu erwartenden Wert des Kontrollparameters definiert. Insbesondere könnten in Abhängigkeit von dem Kontrollparameter verschiedene Referenzwerte für den Kontrollparameter vorgesehen und/oder in der Speichereinheit gespeichert sein. Der Kontrollparameter könnte beispielsweise eine Zeit, innerhalb welcher sich insbesondere zumindest ein von dem Temperatursensor detektierter Positionierungsteilparameter ändern könnte, und/oder ein insbesondere von dem Temperatursensor detektierter Temperaturverlauf und/oder eine insbesondere dem Gargeschirr zugeführte Heizleistung sein. Alternativ oder zusätzlich könnte der Kontrollparameter beispielsweise eine Temperatur der Aufstellplatte und/oder eine Temperatur des Kontaktmoduls und/oder eine Temperatur einer Elektronik der Sensoreinheit sein. Der Kontrollparameter könnte alternativ oder zusätzlich beispielsweise eine insbesondere bislang verstrichene Dauer zumindest eines Garprozesses sein. Alternativ oder zusätzlich könnte der Kontrollparameter beispielsweise eine Position des Kontaktmoduls an dem Gargeschirr insbesondere relativ zu der Heizeinheit und/oder zumindest ein Überlappungsgrad des Gargeschirrs mit der Heizeinheit sein. Der Kontrollparameter könnte alternativ oder zusätzlich beispielsweise eine Position des Gargeschirrs auf der Aufstellplatte und/oder zumindest ein Überlappungsgrad des Gargeschirrs mit der Heizeinheit sein. Alternativ oder zusätzlich könnte der Kontrollparameter beispielsweise eine insbesondere gesamte Anzahl an Heizzonen und/oder eine Solltemperatur zumindest einer insbesondere jeweiligen Heizzone und/oder eine insbesondere aktuelle Temperatur zumindest einer insbesondere jeweiligen Heizzone sein, wobei sich die Aufstellplatte im Falle von mehreren Heizzonen insbesondere anders erwärmen könnte als im Falle lediglich einer einzigen Heizzone. Der Kontrollparameter könnte alternativ oder zusätzlich beispielsweise eine insbesondere elektrische Eigenschaft des Gargeschirrs sein, wobei insbesondere die Heizeinheit die elektrische Eigenschaft des Gargeschirrs detektieren könnte. Alternativ oder zusätzlich könnte der Kontrollparameter beispielsweise eine Temperatur zumindest eines Objekts des Gargeräts des Garsystems sein, wie beispielsweise zumindest einer Bedienerschnittstelle und/oder zumindest einer Kommunikationseinheit und/oder zumindest eines Funkempfängers und/oder zumindest einer Bluetooth-Schnittstelle. Der Kontrollparameter könnte alternativ oder zusätzlich beispielsweise eine Anzahl an Heizeinheiten sein, welche in wenigstens einem Betriebszustand das Gargeschirr beheizen. Dadurch kann insbesondere eine Fehldetektion der Positionierung des Kontaktmoduls an dem Gargeschirr vermieden werden, wodurch insbesondere eine besonders hohe Sicherheit und/oder ein besonders hoher Bedienkomfort ermöglicht werden kann.

Zudem wird vorgeschlagen, dass die Positionierungserfassungseinheit zumindest einen Zeitgeber aufweist und dazu vorgesehen ist, im Fall einer Abweichung des Positionierungsparameters von zumindest einem Referenzwert insbesondere für den Positionierungsparameter den Positionierungsparameter nach einer vordefinierten Zeit erneut zu überprüfen. Insbesondere ist der Referenzwert für den Positionierungsparameter ein Sollwert des Positionierungsparameters. Insbesondere beträgt die vordefinierte Zeit mindestens 1 s, insbesondere mindestens 2 s, vorteilhaft mindestens 5 s, besonders vorteilhaft mindestens 7 s, vorzugsweise mindestens 10 s und besonders bevorzugt mindestens 20 s. Insbesondere beträgt die vordefinierte Zeit maximal 200 s, insbesondere maximal 150 s, vorteilhaft maximal 120 s, besonders vorteilhaft maximal 100 s, vorzugsweise maximal 80 s und besonders bevorzugt maximal 50 s. Dadurch können insbesondere Messfehler vermieden und/oder eine zuverlässige Detektion der Positionierung des Kontaktmoduls an dem Gargeschirr erzielt werden.

Der Positionierungsparameter könnte beispielsweise eine relative Position des Kontaktmoduls relativ zu dem Gargeschirr und/oder eine relative Winkelorientierung des Kontaktmoduls relativ zu dem Gargeschirr sein. Vorzugsweise ist der Positionierungsparameter eine Gartemperatur und/oder ein Relativparameter zumindest eines ersten Kontaktmodulelements des Kontaktmoduls relativ zu zumindest einem zweiten Kontaktmodulelement des Kontaktmoduls und/oder eine auf das Kontaktmodul, insbesondere auf zumindest ein Kontaktmodulelement des Kontaktmoduls, einwirkende Beschleunigungskraft, und zwar insbesondere ein Betrag und/oder eine Richtung der Beschleunigungskraft. Das Kontaktmodul ist insbesondere zumindest zweiteilig ausgebildet und weist insbesondere zumindest ein erstes Kontaktmodulelement und zumindest ein zweites Kontaktmodulelement auf, welches insbesondere von dem ersten Kontaktmodulelement verschieden ist. In wenigstens einem Betriebszustand ist insbesondere das zweite Kontaktmodulelement an dem Gargeschirr insbesondere unmittelbar angeordnet. Das erste Kontaktmodulelement ist in wenigstens einem Betriebszustand insbesondere mittelbar und vorteilhaft mittels des zweiten Kontaktmodulelements an dem Gargeschirr angeordnet. Das erste Kontaktmodulelement und das zweite Kontaktmodulelement könnten in wenigstens einem Betriebszustand beispielsweise stoffschlüssig und/oder formschlüssig und/oder kraftschlüssig miteinander verbunden sein. Insbesondere sind das erste Kontaktmodulelement und das zweite Kontaktmodulelement in wenigstens einem Betriebszustand magnetisch, insbesondere mittels zumindest einer magnetischen Kraft, miteinander verbunden. Beispielsweise könnte in einem der Kontaktmodulelemente ein ferromagnetisches Element und in einem weiteren der Kontaktmodulelemente ein paramagnetisches angeordnet sein, welches in wenigstens einem Betriebszustand insbesondere mit dem ferromagnetischen Element eine magnetische Verbindung herstellen könnte. Die Gartemperatur könnte beispielsweise eine Temperatur des Gargeschirrs und/oder eine Temperatur eines in dem Gargeschirr befindlichen Garguts und/oder eine Temperatur zumindest eines Kontaktmodulelements des Kontaktmoduls sein. Dadurch kann der Positionierungsparameter insbesondere auf einfache Art und Weise detektiert werden. Insbesondere kann ein hoher Sicherheitsstandard erzielt werden.

Die Positionierungserfassungseinheit, insbesondere die Steuereinheit der Positionierungserfassungseinheit, ist dazu vorgesehen, im Fall einer Detektion einer Abweichung der Position des Kontaktmoduls von einer Sollposition zumindest eine Sicherheitsmaßnahme einzuleiten. Die Sicherheitsmaßnahme könnte insbesondere eine Ausgabe zumindest einer Information, insbesondere zumindest eines Warnhinweises, an zumindest einen Bediener sein, und zwar insbesondere mittels zumindest einer Ausgabeeinheit des Garsystems und/oder des Gargeräts und/oder mittels zumindest einer Bedienerschnittstelle des Garsystems und/oder des Gargeräts. Alternativ oder zusätzlich könnte die Sicherheitsmaßnahme insbesondere eine Deaktivierung und/oder Abschaltung zumindest einer insbesondere das Gargeschirr beheizenden Heizeinheit, vorteilhaft aller insbesondere das Gargeschirr beheizenden Heizeinheiten sein. Dadurch kann insbesondere ein besonders hoher Sicherheitsstandard erzielt werden.

Beispielsweise könnte insbesondere ausschließlich die Sensoreinheit der Positionierungserfassungseinheit wenigstens teilweise Teil des Kontaktmoduls sein. Insbesondere könnte das Kontaktmodul insbesondere zusätzlich zu der Sensoreinheit der Positionierungserfassungseinheit zumindest eine Eingabeeinheit und/oder zumindest eine Ausgabeeinheit und/oder zumindest eine Bedienerschnittstelle aufweisen. Vorzugsweise weist das Kontaktmodul zumindest eine Temperaturerfassungseinheit auf, welche dazu vorgesehen ist, zumindest einen Garparameter insbesondere des Gargeschirrs und/oder eines in dem Gargeschirr befindlichen Garguts zu detektieren. Insbesondere sind die Sensoreinheit, welche insbesondere den Temperatursensor aufweist, und die Temperaturerfassungseinheit wenigstens teilweise einstückig ausgebildet. Insbesondere ist der Temperatursensor wenigstens teilweise Teil der Sensoreinheit und der Temperaturerfassungseinheit. Der Garparameter könnte insbesondere eine absolute Temperatur und/oder eine relative Temperatur und/oder ein eine Temperatur charakterisierender Parameter sein. Alternativ oder zusätzlich könnte der Garparameter insbesondere ein Kochzustand und/oder ein Garzustand insbesondere eines in dem Gargeschirr befindlichen Garguts sein, wie beispielsweise ein Simmern und/oder ein Kochen und/oder ein Anbraten und/oder ein Anbrennen und/oder ein Überkochen und/oder einen Überdruck, insbesondere im Fall eines als Druckkochtopf ausgebildeten Gargeschirrs. Insbesondere weist das Kontaktmodul zumindest eine Kommunikationseinheit auf, welche insbesondere zu einer insbesondere drahtlosen Kommunikation mit zumindest einer Steuereinheit des Gargeräts vorgesehen ist, wie beispielsweise mittels Bluetooth. Dadurch kann insbesondere eine geringe Bauteilevielfalt und/oder eine geringe Lagerhaltung und/oder eine preisgünstige Ausgestaltung erreicht werden.

Weiterhin wird vorgeschlagen, dass die Positionierungserfassungseinheit, welche insbesondere die Sensoreinheit mit dem Temperatursensor aufweist, dazu vorgesehen ist, eine Abweichung einer Positionierung des Kontaktmoduls von einer Sollposition von einer Schwankung des Garparameters aufgrund einer Bedienereinwirkung zu unterscheiden. Die Schwankung aufgrund der Bedienereinwirkung könnte beispielsweise aufgrund einer Lebensmittelzugabe insbesondere in das Gargeschirr und/oder aufgrund einer Lebensmittelentnahme insbesondere aus dem Gargeschirr und/oder aufgrund eines Umrührens insbesondere zumindest eines in dem Gargeschirr befindlichen insbesondere gefrorenen Garguts und/oder aufgrund eines Entfernens eines Gargeschirrdeckels von dem Gargeschirr und/oder aufgrund eines Aufsetzens eines Gargeschirrdeckels auf das Gargeschirr hervorgerufen sein. Insbesondere weist die Positionierungserfassungseinheit zumindest eine Speichereinheit auf, in welcher insbesondere zumindest eine Referenzschwankung des Garparameters aufgrund einer Bedienereinwirkung, insbesondere zumindest zwei, vorteilhaft zumindest vier, besonders vorteilhaft zumindest acht und vorzugsweise mehrere Referenzschwankungen des Garparameters aufgrund einer Bedienereinwirkung gespeichert sind. Insbesondere ist in der Speichereinheit der Positionierungserfassungseinheit zumindest ein Referenzwert für den Positionierungsparameter gespeichert. Die Positionierungserfassungseinheit könnte insbesondere den Positionierungsparameter mit zumindest einem Referenzwert für den Positionierungsparameter und/oder mit zumindest einer Referenzschwankung vergleichen und hierdurch insbesondere eine Abweichung einer Positionierung des Kontaktmoduls von einer Sollposition von einer Schwankung des Garparameters aufgrund einer Bedienereinwirkung unterscheiden. Dadurch können insbesondere Messfehler und/oder fälschlicherweise eingeleitete Sicherheitsmaßnahmen vermieden werden, wodurch insbesondere ein hoher Bedienkomfort ermöglicht werden kann.

Das Garsystem weist insbesondere zumindest eine Gargeräte-Steuereinheit auf, welche insbesondere wenigstens teilweise Teil des Gargeräts ist. Die Gargeräte-Steuereinheit ist zu einer Durchführung eines automatischen Garprozesses vorgesehen. In wenigstens einem Betriebszustand führt die Gargeräte-Steuereinheit eines automatischen Garprozesses durch. In Abhängigkeit von dem von der Temperaturerfassungseinheit detektierten Garparameter regelt die Gargeräte-Steuereinheit eine Energiezufuhr zu der Heizeinheit. Insbesondere erhöht die Gargeräte-Steuereinheit in wenigstens einem Betriebszustand eine Energiezufuhr zu der Heizeinheit, falls der Garparameter kleiner ist als ein Referenzwert für den Garparameter, und erniedrigt insbesondere eine Energiezufuhr zu der Heizeinheit, falls der Garparameter größer ist als ein Referenzwert für den Garparameter. Dadurch kann insbesondere ein hoher Bedienkomfort erreicht werden.

Ein besonders hoher Bedienkomfort kann insbesondere erreicht werden durch ein Verfahren zu einem Betrieb eines Garsystems, mit zumindest einem Kontaktmodul, welches zu einer Anordnung an zumindest einem Gargeschirr vorgesehen ist, wobei eine ordnungsgemäße Positionierung des Kontaktmoduls an dem Gargeschirr automatisch und/oder elektronisch überprüft wird. Unter "automatisch" soll insbesondere selbststätig und/oder unter Vermeidung einer Einwirkung einer Person, insbesondere eines Bedieners verstanden werden. Das Garsystem soll hierbei nicht auf die oben beschriebene Anwendung und Ausführungsform beschränkt sein. Insbesondere kann das Garsystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein Garsystem mit einem Kontaktmodul und mit einem Gargerät in einer schematischen Draufsicht,
- Fig. 2: einen Schnitt entlang der Linie II-II aus Figur 1 in einer schematischen Darstellung,
- Fig. 3: ein Gargeschirr und ein Kontaktmodul des Garsystems in einer schematischen Explosionsdarstellung,
- Fig. 4: ein Diagramm eines Verfahrens zu einem Betrieb des Garsystems in einer schematischen Darstellung,
- Fig. 5: einen Verlauf eins Positionierungsparameters über einer Zeit in einem Betriebszustand in einer schematischen Darstellung,
- Fig. 6: einen Verlauf eins Positionierungsparameters über einer Zeit in einem Betriebszustand in einer schematischen Darstellung,
- Fig. 7: einen Verlauf eins Positionierungsparameters über einer Zeit in einem Betriebszustand in einer schematischen Darstellung,
- Fig. 8: einen Verlauf eins Positionierungsparameters über einer Zeit in einem Betriebszustand in einer schematischen Darstellung,
- Fig. 9: einen Verlauf eins Positionierungsparameters über einer Zeit in einem Betriebszustand in einer schematischen Darstellung,
- Fig. 10: einen Ausschnitt eines alternativen Garsystems mit einem Kontaktmodul und mit einem Gargerät in einer schematischen Schnittdarstellung,
- Fig. 11: einen Verlauf eins Positionierungsparameters über einer Zeit in einem Betriebszustand in einer schematischen Darstellung,
- Fig. 12: einen Ausschnitt eines alternativen Garsystems mit einem Kontaktmodul und mit einem Gargerät in einer schematischen Schnittdarstellung,
- Fig. 13: einen Ausschnitt eines alternativen Garsystems mit einem Kontaktmodul und mit einem Gargerät in einer schematischen Schnittdarstellung und
- Fig. 14: einen Ausschnitt eines alternativen Garsystems mit einem Kontaktmodul und mit einem Gargerät in einer schematischen Schnittdarstellung.

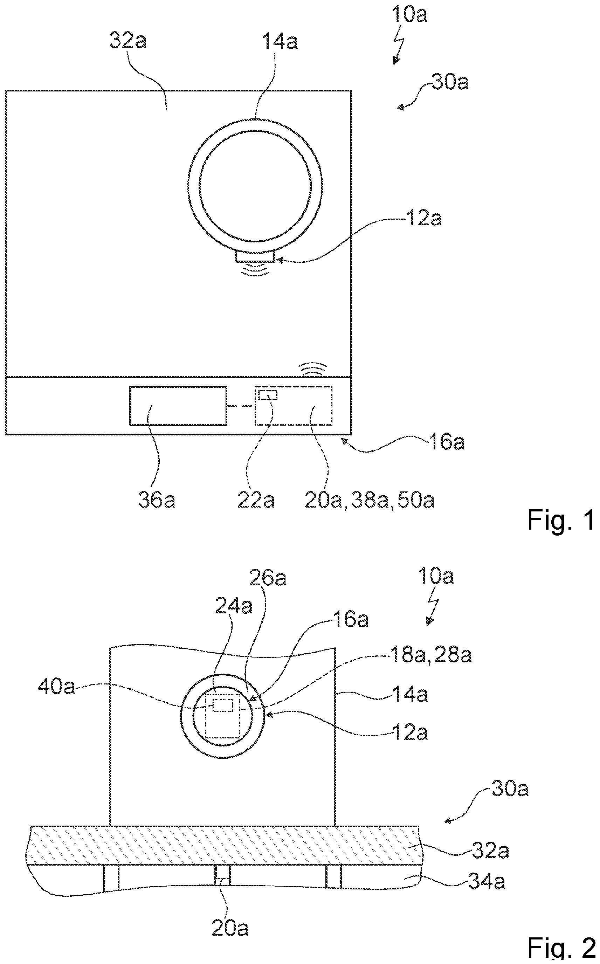

Fig. 1 zeigt ein Garsystem 10a, das als ein Induktionsgarsystem ausgebildet ist. Das Garsystem 10a weist ein Gargerät 30a auf. Das Gargerät 30a ist als ein Kochfeld, und zwar insbesondere als ein Induktionskochfeld, ausgebildet.

Das Garsystem 10a weist eine Aufstellplatte 32a auf. In einem montierten Zustand bildet die Aufstellplatte 32a eine Sichtfläche aus, welche in einem montierten Zustand insbesondere einem Bediener zugewandt angeordnet ist. Die Aufstellplatte 32a ist Teil des Gargeräts 30a. Die Aufstellplatte 32a ist zu einem Aufstellen eines Gargeschirrs 14a in einem Aufstellbereich zu einer Beheizung vorgesehen (vgl. Fig. 1 und 2). Im vorliegenden Ausführungsbeispiel ist die Aufstellplatte 32a als eine Kochfeldplatte ausgebildet.

Das Garsystem 10a weist zumindest eine Heizeinheit 34a auf (vgl. Fig. 2). Im vorliegenden Ausführungsbeispiel weist das Garsystem 10a eine Vielzahl an Heizeinheiten 34a auf. Alternativ könnte das Garsystem 10a beispielsweise eine kleinere Anzahl an Heizeinheiten 34a aufweisen, wie beispielsweise genau eine Heizeinheit 34a und/oder zumindest zwei, insbesondere zumindest vier, vorteilhaft zumindest acht, besonders vorteilhaft zumindest zwölf und vorzugsweise mehrere Heizeinheiten 34a. Die Heizeinheiten 34a könnten beispielsweise in Form einer Matrix angeordnet sein. Im Folgenden wird lediglich eine der Heizeinheiten 34a beschrieben.

Die Heizeinheit 34a ist in einer Einbaulage unterhalb der Aufstellplatte 32a angeordnet, und zwar insbesondere unterhalb des Aufstellbereichs. Die Heizeinheit 34a ist dazu vorgesehen, auf der Aufstellplatte 32a oberhalb der Heizeinheit 34a und insbesondere in dem Aufstellbereich aufgestelltes Gargeschirr 14a zu erhitzen. Die Heizeinheit 34a ist als Induktionsheizeinheit ausgebildet. Die Heizeinheit 34a ist Teil des Gargeräts 30a.

Das Garsystem 10a weist eine Bedienerschnittstelle 36a zu einer Eingabe und/oder Auswahl von Betriebsparametern auf, beispielsweise einer Heizleistung und/oder einer Heizleistungsdichte und/oder einer Heizzone. Die Bedienerschnittstelle 36a ist zu einer Ausgabe eines Werts eines Betriebsparameters an einen Bediener vorgesehen. Die Bedienerschnittstelle 36a ist Teil des Gargeräts 30a.

Das Garsystem 10a weist eine Gargeräte-Steuereinheit 38a auf. In einem Betriebszustand steuert und/oder regelt die Gargeräte-Steuereinheit 38a eine Gargerätehauptfunktion. Die Gargeräte-Steuereinheit 38a ist dazu vorgesehen, in Abhängigkeit von mittels der Bedienerschnittstelle 36a eingegebener Betriebsparameter, Aktionen auszuführen und/oder Einstellungen zu verändern. Die Gargeräte-Steuereinheit 38a regelt in einem Heizbetriebszustand eine Energiezufuhr zu der Heizeinheit 34a. Die Gargeräte-Steuereinheit 38a ist Teil des Gargeräts 30a.

Das Garsystem 10a weist ein Kontaktmodul 12a auf (vgl. Fig. 1 bis 3). Das Kontaktmodul 12a ist zu einer Anordnung an dem Gargeschirr 14a vorgesehen. In einem Betriebszustand ist das Kontaktmodul 12a dem Gargeschirr 14a angeordnet, und zwar insbesondere an einer Seitenwand des Gargeschirrs 14a.

Das Kontaktmodul 12a ist zweiteilig ausgebildet. Das Kontaktmodul 12a weist ein erstes Kontaktmodulelement 24a und ein zweites Kontaktmodulelement 26a auf. In einem Betriebszustand ist das zweite Kontaktmodulelement 26a unmittelbar an dem Gargeschirr 14a angeordnet. Das erste Kontaktmodulelement 24a ist in einem Betriebszustand mittelbar an dem Gargeschirr 14a angeordnet, und zwar insbesondere mittels des zweiten Kontaktmodulelements 26a. Das erste Kontaktmodulelement 24a und das zweite Kontaktmodulelement 26a sind in einem Betriebszustand magnetisch miteinander verbunden.

Das Garsystem 10a weist eine Positionierungserfassungseinheit 16a auf. In einem Betriebszustand überprüft die Positionierungserfassungseinheit 16a eine ordnungsgemäße Positionierung des Kontaktmoduls 12a an dem Gargeschirr 14a. Die Positionierungserfassungseinheit 16a könnte beispielsweise in einem Betriebszustand eine ordnungsgemäße Positionierung des gesamten Kontaktmoduls 12a, insbesondere des ersten Kontaktmodulelements 24a und des zweiten Kontaktmodulelements 26a, an dem Gargeschirr 14a überprüfen. Alternativ oder zusätzlich könnte die Positionierungserfassungseinheit 16a beispielsweise in einem Betriebszustand eine ordnungsgemäße Positionierung des ersten Kontaktmodulelements 24a an dem Gargeschirr 14a und/oder des zweiten Kontaktmodulelements 26a an dem Gargeschirr 14a überprüfen.

Zu der Überprüfung einer ordnungsgemäßen Positionierung des Kontaktmoduls 12a an dem Gargeschirr 14a weist die Positionierungserfassungseinheit 16a eine Sensoreinheit 18a auf. Die Sensoreinheit 18a ist Teil des Kontaktmoduls 12a. Die Sensoreinheit 18a ist in dem Kontaktmodul 12a integriert. Die Positionierungserfassungseinheit 16a ist teilweise Teil des Kontaktmoduls 12a. Im vorliegenden Ausführungsbeispiel ist die Sensoreinheit 18a Teil des ersten Kontaktmodulelements 24a.

In einem Betriebszustand detektiert die Sensoreinheit 18a einen Positionierungsparameter. Der Positionierungsparameter charakterisiert eine ordnungsgemäße Positionierung des Kontaktmoduls 12a an dem Gargeschirr 14a. Im vorliegenden Ausführungsbeispiel weist die Sensoreinheit 18a einen Temperatursensor 40a auf (vgl. Fig. 2). In einem Betriebszustand detektiert der Temperatursensor 40a einen Positionierungsteilparameter des Positionierungsparameters. Der Positionierungsteilparameter des Positionierungsparameters und der Positionierungsparameter sind im vorliegenden Ausführungsbeispiel identisch. Alternativ könnte der Positionierungsparameter insbesondere neben dem Positionierungsteilparameter des Positionierungsparameters zumindest einen weiteren Positionierungsteilparameter aufweisen.

Der Positionierungsparameter ist im vorliegenden Ausführungsbeispiel eine Gartemperatur. Im vorliegenden Ausführungsbeispiel ist der Positionierungsparameter eine Temperatur des zweiten Kontaktmodulelements 26a. Alternativ oder zusätzlich könnte der Positionierungsparameter beispielsweise eine Temperatur eines in dem Gargeschirr 14a befindlichen Garguts sein.

Die Positionierungserfassungseinheit 16a weist eine Steuereinheit 50a auf (vgl. Fig. 1). Die Steuereinheit 50a ist Teil des Gargeräts 30a. Die Steuereinheit 50a ist in dem Gargerät 30a integriert. Die Positionierungserfassungseinheit 16a ist teilweise Teil des Gargeräts 30a. Alternativ könnte die Steuereinheit 50a Teil des Kontaktmoduls 12a und/oder in dem Kontaktmodul 12a integriert sein.

Die Steuereinheit 50a und die Gargeräte-Steuereinheit 38a sind einstückig ausgebildet. In einem Betriebszustand kommunizieren die Steuereinheit 50a und die Sensoreinheit 18a miteinander, und zwar insbesondere drahtlos.

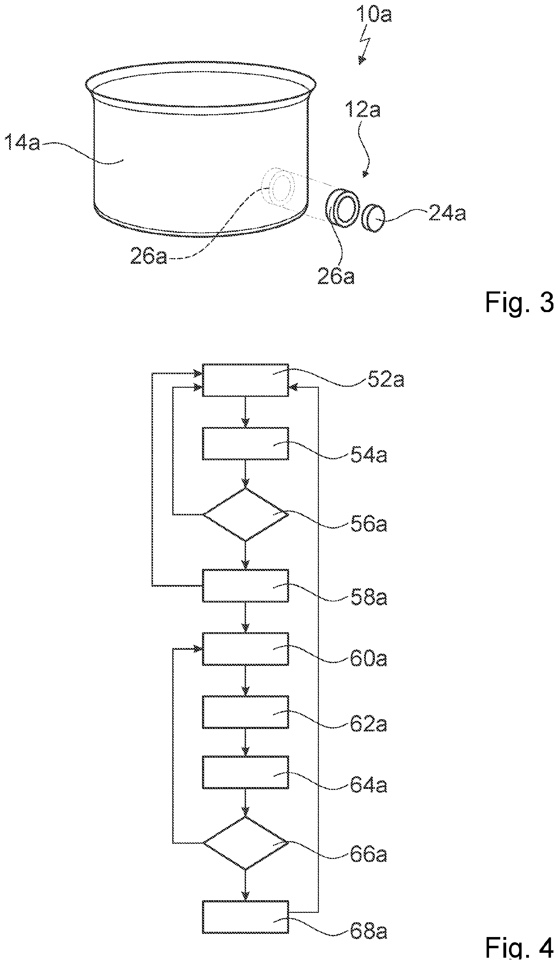

In einem Verfahren zu einem Betrieb des Garsystems 10a wird eine ordnungsgemäße Positionierung des Kontaktmoduls 12a an dem Gargeschirr 14a automatisch, insbesondere durch die Positionierungserfassungseinheit 16a, überprüft. In einem Detektionsschritt 52a wird der Positionierungsparameter detektiert (vgl. Fig. 4). Die Positionierungserfassungseinheit 16a detektiert in dem Detektionsschritt 52a, insbesondere mittels der Sensoreinheit 18a und vorteilhaft mittels dem Temperatursensor 40a, den Positionierungsparameter.

Die Positionierungserfassungseinheit 16a vergleicht in einem Vergleichsschritt 54a den Positionierungsparameter mit einem Referenzwert für den Positionierungsparameter. In Abhängigkeit von dem Vergleich des Positionierungsparametersmit dem Referenzwert für den Positionierungsparameter überprüft die Positionierungserfassungseinheit 16a eine ordnungsgemäße Positionierung des Kontaktmoduls 12a an dem Gargeschirr 14a. In einem Entscheidungsschritt 56a entscheidet die Positionierungserfassungseinheit 16a, ob eine ordnungsgemäße Positionierung des Kontaktmoduls 12a an dem Gargeschirr 14a vorliegt.

Im Fall einer, insbesondere in dem Entscheidungsschritt 56a erkannten, ordnungsgemäßen Positionierung des Kontaktmoduls 12a an dem Gargeschirr 14a kehrt die Positionierungserfassungseinheit 16a zu dem Detektionsschritt 52a zurück. Im Fall einer, insbesondere in dem Entscheidungsschritt 56a erkannten, Abweichung von einer ordnungsgemäßen Positionierung des Kontaktmoduls 12a an dem Gargeschirr 14a geht die Positionierungserfassungseinheit 16a, insbesondere nach einer vordefinierten Zeit, in einen Überprüfungsschritt 58a über.

Die Positionierungserfassungseinheit 16a weist einen Zeitgeber 22a auf (vgl. Fig. 1). Im vorliegenden Ausführungsbeispiel ist der Zeitgeber 22a Teil des Gargeräts 30a. Der Zeitgeber 22a ist in dem Gargerät 30a integriert. Der Zeitgeber 22a und die Steuereinheit 50a sind teilweise einstückig ausgebildet. Die Positionierungserfassungseinheit 16a überprüft im Fall einer Abweichung des Positionierungsparameters von einem Referenzwert für den Positionierungsparameter in dem Überprüfungsschritt 58a den Positionierungsparameter nach einer vordefinierten Zeit erneut.

Im Fall einer, insbesondere in dem Überprüfungsschritt 58a erkannten, ordnungsgemäßen Positionierung des Kontaktmoduls 12a an dem Gargeschirr 14a kehrt die Positionierungserfassungseinheit 16a zu dem Detektionsschritt 52a zurück. Im Fall einer, insbesondere in dem Überprüfungsschritt 58a erkannten, Abweichung von einer ordnungsgemäßen Positionierung des Kontaktmoduls 12a an dem Gargeschirr 14a geht die Positionierungserfassungseinheit 16a in einen Sicherheitsschritt 60a über.

Im Fall eines Erkennens einer Abweichung der Position des Kontaktmoduls 12a von einer Sollposition leitet die Positionierungserfassungseinheit 16a in dem Sicherheitsschritt 60a zumindest eine Sicherheitsmaßnahme ein. Im vorliegenden Ausführungsbeispiel gibt die Steuereinheit 50a in dem Sicherheitsschritt 60a einen Warnhinweis an einen Bediener aus. Die Sicherheitsmaßnahme ist eine Ausgabe eines Warnhinweises an einen Bediener.

Die Positionierungserfassungseinheit 16a detektiert in einem weiteren Detektionsschritt 62a, insbesondere mittels der Sensoreinheit 18a und vorteilhaft mittels dem Temperatursensor 40a, den Positionierungsparameter. Die Positionierungserfassungseinheit 16a vergleicht in einem weiteren Vergleichsschritt 64a den Positionierungsparameter mit einem Referenzwert für den Positionierungsparameter. In Abhängigkeit von dem Vergleich des Positionierungsparameters mit dem Referenzwert für den Positionierungsparameter überprüft die Positionierungserfassungseinheit 16a eine ordnungsgemäße Positionierung des Kontaktmoduls 12a an dem Gargeschirr 14a.

In einem weiteren Entscheidungsschritt 66a entscheidet die Positionierungserfassungseinheit 16a, ob eine ordnungsgemäße Positionierung des Kontaktmoduls 12a an dem Gargeschirr 14a vorliegt, welche insbesondere durch einen Bediener wieder hergestellt sein könnte. Die Positionierungserfassungseinheit 16a erkennt automatisch eine Rückkehr des Kontaktmoduls 12a in eine ordnungsgemäßen Positionierung des Kontaktmoduls 12a an dem Gargeschirr 14a. Alternativ oder zusätzlich könnte die Positionierungserfassungseinheit 16a eine Rückkehr des Kontaktmoduls 12a in eine ordnungsgemäßen Positionierung des Kontaktmoduls 12a an dem Gargeschirr 14a durch eine Bedieneingabe mittels der Bedienerschnittstelle 36a erkennen.

Im Fall einer, insbesondere in dem weiteren Entscheidungsschritt 66a erkannten, ordnungsgemäßen Positionierung des Kontaktmoduls 12a an dem Gargeschirr 14a kehrt die Positionierungserfassungseinheit 16a zu dem Detektionsschritt 52a zurück. Im Fall einer, insbesondere in dem weiteren Entscheidungsschritt 66a erkannten, Abweichung von einer ordnungsgemäßen Positionierung des Kontaktmoduls 12a an dem Gargeschirr 14a und einer seit der Erkennung einer Abweichung von einer ordnungsgemäßen Positionierung des Kontaktmoduls 12a an dem Gargeschirr 14a verstrichenen Zeitdauer, welche kleiner ist als ein Referenzwert für die Zeitdauer, kehrt die Positionierungserfassungseinheit 16a zu dem weiteren Detektionsschritt 62a zurück.

Im Fall einer, insbesondere in dem weiteren Entscheidungsschritt 66a erkannten, Abweichung von einer ordnungsgemäßen Positionierung des Kontaktmoduls 12a an dem Gargeschirr 14a und einer seit der Erkennung einer Abweichung von einer ordnungsgemäßen Positionierung des Kontaktmoduls 12a an dem Gargeschirr 14a verstrichenen Zeitdauer, welche größer ist als ein Referenzwert für die Zeitdauer, leitet die Positionierungserfassungseinheit 16a eine Deaktivierung der das Gargeschirr 14a beheizenden Heizeinheit 34a und/oder Heizeinheiten 34a ein. Die Sicherheitsmaßnahme ist eine Deaktivierung der das Gargeschirr 14a beheizenden Heizeinheit 34a und/oder Heizeinheiten 34a. In einem Deaktivierungsschritt 68a deaktiviert die Positionierungserfassungseinheit 16a mittels der Kochfeld-Steuereinheit 38a die das Gargeschirr 14a beheizenden Heizeinheit 34a und/oder Heizeinheiten 34a.

Die Positionierungserfassungseinheit 16a weist eine weitere Sensoreinheit 20a auf (vgl. Fig. 1 und 2). In einem Betriebszustand detektiert die weitere Sensoreinheit 20a einen Kontrollparameter zu einer Überprüfung des Positionierungsparameters. Im vorliegenden Ausführungsbeispiel ist die weitere Sensoreinheit 20a teilweise unterhalb der Aufstellplatte 32a angeordnet. Die Sensoreinheit 20a detektiert in einem Betriebszustand eine Temperatur der Aufstellplatte 32a. Der Kontrollparameter ist eine Temperatur der Aufstellplatte 32a.

Im vorliegenden Ausführungsbeispiel ist die weitere Sensoreinheit 20a teilweise einstückig mit der Kochfeld-Steuereinheit 38a ausgebildet. Die weitere Sensoreinheit 20a detektiert eine der Heizeinheit 34a, welche das Gargeschirr 14a beheizt, zugeführte Heizleistung. Der Kontrollparameter ist eine der Heizeinheit 34a, welche das Gargeschirr 14a beheizt, zugeführte Heizleistung.

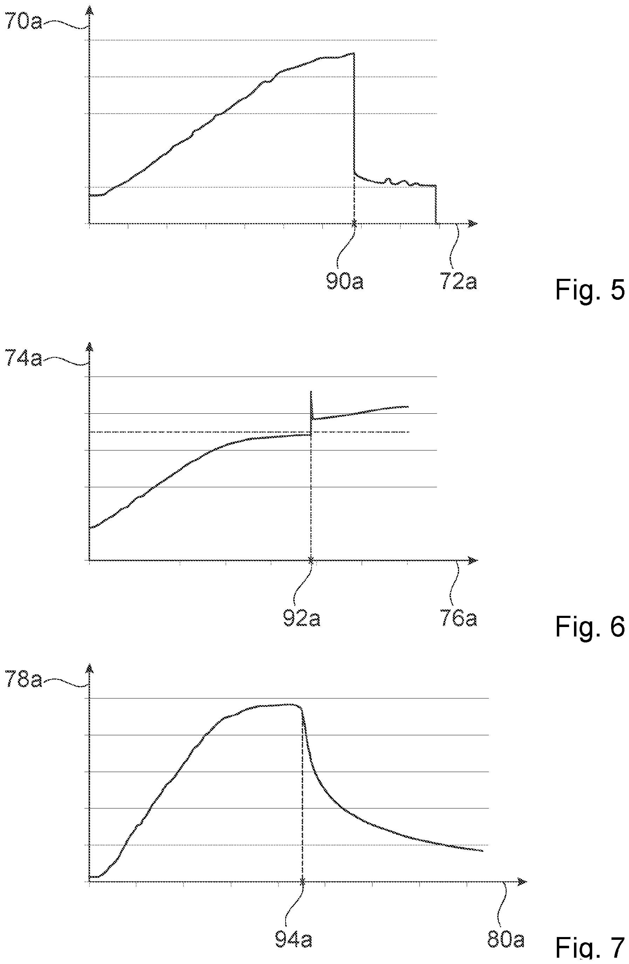

Die Positionierungserfassungseinheit 16a unterscheidet in einem Betriebszustand verschiedene Fälle einer Abweichung von einer ordnungsgemäßen Positionierung des Kontaktmoduls 12a an dem Gargeschirr 14a. Die Positionierungserfassungseinheit 16a erkennt in einem Betriebszustand eine Abweichung einer ordnungsgemäßen Positionierung des ersten Kontaktmodulelements 24a an dem zweiten Kontaktmodulelement 26a (vgl. Fig. 5 und 6). Der Positionierungsparameter ist ein Relativparameter des ersten Kontaktmodulelements 24a des Kontaktmoduls 12a relativ zu dem zweiten Kontaktmodulelement 26a des Kontaktmoduls 12a. Eine Abweichung einer ordnungsgemäßen Positionierung des ersten Kontaktmodulelements 24a an dem zweiten Kontaktmodulelement 26a könnte beispielsweise durch eine auf das Kontaktmodul 12a, insbesondere auf das erste Kontaktmodulelement 24a, einwirkende, insbesondere durch einen Bediener verursachte Kraft auftreten.

In einem Betriebszustand erkennt die Positionierungserfassungseinheit 16a eine Abweichung einer ordnungsgemäßen Positionierung des ersten Kontaktmodulelements 24a an dem zweiten Kontaktmodulelement 26a anhand einer abrupten Änderung in einem Verlauf des Positionierungsparameters über einer Zeit (vgl. Fig. 5 und 6), welcher insbesondere darin begründet liegt, dass die in dem ersten Kontaktmodulelement 24a integrierte Sensoreinheit 18a nunmehr anstatt einer Temperatur des zweiten Kontaktmodulelements 26a eine Temperatur einer weiteren Oberfläche detektiert, die von einer Temperatur des zweiten Kontaktmodulelements 26a abweicht. Ein solcher Fall lässt sich in der Regel schnell, insbesondere innerhalb einer Zeitspanne von wenigen Sekunden, wieder beheben, da ein Bediener in der näheren Umgebung ist und eine ordnungsgemäße Positionierung des ersten Kontaktmodulelements 24a an dem zweiten Kontaktmodulelement 26a wiederherstellen kann.

Fig. 5 zeigt einen Verlauf des Positionierungsparameters über einer Zeit. Auf einer Ordinatenachse 70a ist der Positionierungsparameter aufgetragen. Auf einer Abszissenachse 72a ist eine Zeit aufgetragen. Bei einem beliebigen Zeitpunkt 90a löst sich das erste Kontaktmodulelement 24a aus einer ordnungsgemäßen Positionierung des ersten Kontaktmodulelements 24a an dem zweiten Kontaktmodulelement 26a. Das erste Kontaktmodulelement 24a fällt auf eine kalte Oberfläche, beispielsweise auf einen unbeheizten Bereich der Aufstellplatte 32a. Die in dem ersten Kontaktmodulelement 24a integrierte Sensoreinheit 18a misst eine Temperatur der kalten Oberfläche. Die Positionierungserfassungseinheit 16a erkennt anhand des Verlaufs des Positionierungsparameters eine Abweichung einer ordnungsgemäßen Positionierung des ersten Kontaktmodulelements 24a an dem zweiten Kontaktmodulelement 26a und insbesondere zusätzlich eine Anordnung des ersten Kontaktmodulelements 24a auf einer kalten Oberfläche.

Fig. 6 zeigt einen Verlauf des Positionierungsparameters über einer Zeit. Auf einer Ordinatenachse 74a ist der Positionierungsparameter aufgetragen. Auf einer Abszissenachse 76a ist eine Zeit aufgetragen. Bei einem beliebigen Zeitpunkt 92a löst sich das erste Kontaktmodulelement 24a aus einer ordnungsgemäßen Positionierung des ersten Kontaktmodulelements 24a an dem zweiten Kontaktmodulelement 26a. Das erste Kontaktmodulelement 24a fällt auf eine heiße Oberfläche, beispielsweise auf einen beheizten Bereich der Aufstellplatte 32a, welche eine höhere Temperatur aufweist als das Gargeschirr 14a. Die in dem ersten Kontaktmodulelement 24a integrierte Sensoreinheit 18a misst eine Temperatur der heißen Oberfläche. Die Positionierungserfassungseinheit 16a erkennt anhand des Verlaufs des Positionierungsparameters eine Abweichung einer ordnungsgemäßen Positionierung des ersten Kontaktmodulelements 24a an dem zweiten Kontaktmodulelement 26a und insbesondere zusätzlich eine Anordnung des ersten Kontaktmodulelements 24a auf einer heißen Oberfläche.

Die Positionierungserfassungseinheit 16a erkennt in einem Betriebszustand eine Abweichung einer ordnungsgemäßen Positionierung des insbesondere gesamten Kontaktmoduls 12a an dem Gargeschirr 14a (vgl. Fig. 7). Eine Abweichung einer ordnungsgemäßen Positionierung des insbesondere gesamten Kontaktmoduls 12a an dem Gargeschirr 14a könnte beispielsweise durch eine fehlerhafte Verbindung zwischen dem zweiten Kontaktmodulelement 26a und dem Gargeschirr 14a, insbesondere durch eine fehlerhafte Anordnung des zweiten Kontaktmodulelements 26a und dem Gargeschirr 14a, verursacht sein.

In einem Betriebszustand erkennt die Positionierungserfassungseinheit 16a eine Abweichung einer ordnungsgemäßen Positionierung des insbesondere gesamten Kontaktmoduls 12a an dem Gargeschirr 14a anhand einer allmählich eintretenden Änderung in einem Verlauf des Positionierungsparameters über einer Zeit (vgl. Fig. 7), welcher insbesondere darin begründet liegt, dass die in dem ersten Kontaktmodulelement 24a integrierte Sensoreinheit 18a eine Temperatur des zweiten Kontaktmodulelements 26a detektiert, welche sich jedoch langsam abkühlt aufgrund eines mangelhaften Kontakts zu einer insbesondere heißen Oberfläche des Gargeschirrs 14a. Ein solcher Fall lässt sich in der Regel innerhalb einer Zeitspanne von im Wesentlichen 10 s wieder beheben.

Fig. 7 zeigt einen Verlauf des Positionierungsparameters über einer Zeit. Auf einer Ordinatenachse 78a ist der Positionierungsparameter aufgetragen. Auf einer Abszissenachse 80a ist eine Zeit aufgetragen. Bei einem beliebigen Zeitpunkt 94a löst sich das insbesondere gesamte Kontaktmodul 12a aus einer ordnungsgemäßen Positionierung des insbesondere gesamten Kontaktmoduls 12a an dem Gargeschirr 14a. Die Positionierungserfassungseinheit 16a erkennt anhand des Verlaufs des Positionierungsparameters eine Abweichung einer ordnungsgemäßen Positionierung des insbesondere gesamten Kontaktmoduls 12a an dem Gargeschirr 14a, und zwar insbesondere anhand eines sich allmählich ändernden Verlaufs des Positionierungsparameters.

Das Kontaktmodul 12a weist eine Temperaturerfassungseinheit 28a auf (vgl. Fig. 2). In einem Betriebszustand detektiert die Temperaturerfassungseinheit 28a einen Garparameter.

Im vorliegenden Ausführungsbeispiel ist der Garparameter eine Gartemperatur. Der Garparameter und der Positionierungsparameter, welcher insbesondere von dem Temperatursensor 40a detektiert ist, sind identisch. Die Temperaturerfassungseinheit 28a und die Sensoreinheit 18a sind teilweise einstückig ausgebildet.

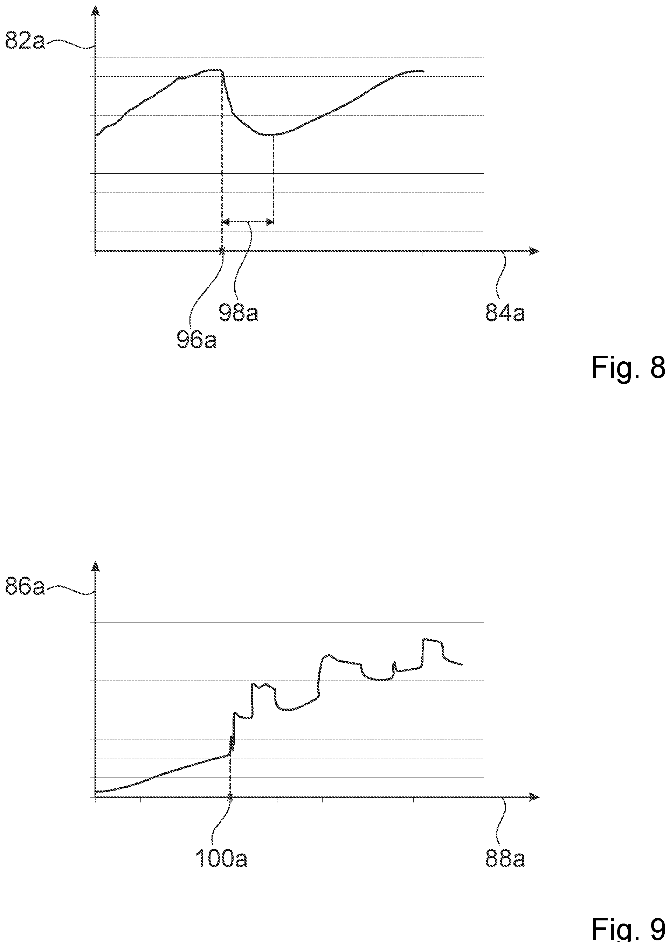

In einem Betriebszustand unterscheidet die Positionierungserfassungseinheit 16a eine Abweichung einer Positionierung des Kontaktmoduls 12a von einer Sollposition von einer Schwankung des Garparameters aufgrund einer Bedienereinwirkung (vgl. Fig. 8 und 9).

Fig. 8 zeigt einen Verlauf des Positionierungsparameters und/oder des Garparameters über einer Zeit. Auf einer Ordinatenachse 82a ist der Positionierungsparameter und/oder der Garparameter aufgetragen. Auf einer Abszissenachse 84a ist eine Zeit aufgetragen. Bei einem beliebigen Zeitpunkt 96a fügt ein Bediener zumindest ein Gargut in das Gargeschirr 14a ein, beispielsweise eine große Portion Gemüse und/oder ein großes Stück Fleisch. Der Verlauf des Positionierungsparameters und/oder des Garparameters fällt für eine Zeitspanne 98a, welche beispielsweise 100 s betragen könnte, ab und steigt anschließend wieder an, und zwar insbesondere aufgrund einer dem Gargeschirr 14a mittels der Heizeinheit 34a zugeführten Energie.

Fig. 9 zeigt einen Verlauf des Positionierungsparameters und/oder des Garparameters über einer Zeit. Auf einer Ordinatenachse 86a ist der Positionierungsparameter und/oder der Garparameter aufgetragen. Auf einer Abszissenachse 88a ist eine Zeit aufgetragen. Im dargestellten Beispiel befindet sich in dem Gargeschirr 14a ein gefrorenes Lebensmittel, beispielsweise Gemüse, in einem heißen Fluid, beispielsweise Wasser. Bei einem beliebigen Zeitpunkt 100a beginnt ein Bediener das Fluid mit dem darin befindlichen gefrorenen Lebensmittel umzurühren. Der Verlauf des von der Sensoreinheit 18a detektierten Positionierungsparameters und/oder des Garparameters enthält starke Schwankungen, und zwar insbesondere aufgrund einer Änderung einer Position des gefrorenen Lebensmittels.

In einem Betriebszustand erkennt die Positionierungserfassungseinheit 16a eine Abweichung des Kontaktmoduls 12a von einer ordnungsgemäßen Positionierung des Kontaktmoduls 12a an dem Gargeschirr 14a anhand einer zu starken Änderung des Positionierungsparameters insbesondere innerhalb einer kurzen Zeitspanne. Die Positionierungserfassungseinheit 16a erkennt in einem Betriebszustand eine Abweichung des Kontaktmoduls 12a von einer ordnungsgemäßen Positionierung des Kontaktmoduls 12a an dem Gargeschirr 14a anhand einer zu geringen Änderung des Positionierungsparameters insbesondere bei einem Vergleich mit einer zu erwartenden Änderung des Positionierungsparameters. Die zu erwartende Änderung des Positionierungsparameters ermittelt die Positionierungserfassungseinheit 16a teilweise aus einer dem Gargeschirr 14a zugeführten Energie, insbesondere Heizenergie.

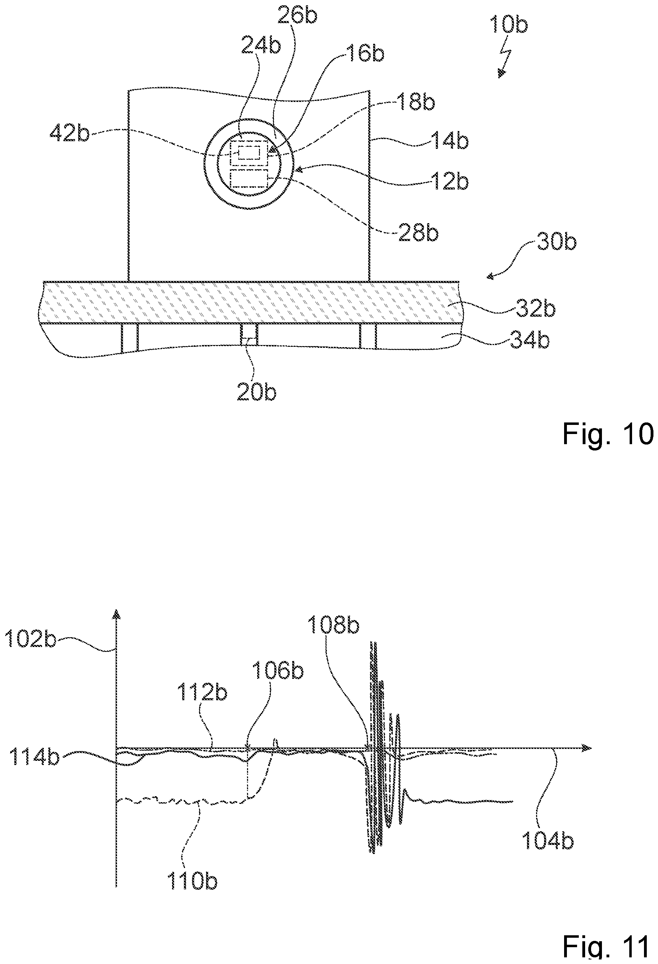

In Fig. 10 bis 14 sind vier weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 9 verwiesen werden kann. Zur Unterscheidung der Ausführungsbeispiele ist der Buchstabe a in den Bezugszeichen des Ausführungsbeispiels in den Fig. 1 bis 9 durch die Buchstaben b bis e in den Bezugszeichen der Ausführungsbeispiele der Fig. 10 bis 14 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 9 verwiesen werden.

Fig. 10 zeigt einen Ausschnitt eines alternativen Garsystems 10b, welches ein Kontaktmodul 12b und ein Gargerät 30b aufweist. Das Kontaktmodul 12b weist ein erstes Kontaktmodulelement 24b und ein zweites Kontaktmodulelement 26b auf. In einem Betriebszustand überprüft eine Positionierungserfassungseinheit 16b des Garsystems 10b eine ordnungsgemäße Positionierung des Kontaktmoduls 12b an dem Gargeschirr 14b.

Die Positionierungserfassungseinheit 16b weist eine Sensoreinheit 18b auf, welche in einem Betriebszustand einen Positionierungsparameter detektiert. Die Sensoreinheit 18b ist Teil des Kontaktmoduls 12b. Im vorliegenden Ausführungsbeispiel weist die Sensoreinheit 18b einen Bewegungssensor 42b auf. Der Bewegungssensor 42b ist als ein Beschleunigungssensor ausgebildet. In einem Betriebszustand detektiert der Bewegungssensor 42b drei Positionierungsteilparameter des Positionierungsparameters. Die Positionierungsteilparameter des Positionierungsparameters sind jeweils als eine in einer Richtung wirkende Beschleunigungskraft ausgebildet. Der Positionierungsparameter ist im vorliegenden Ausführungsbeispiel eine Beschleunigungskraft.

In einem Betriebszustand detektiert die Positionierungserfassungseinheit 16b, insbesondere mittels des Bewegungssensors 42b, eine Bewegung des Kontaktmoduls 12b und/oder eine relative Winkelorientierung des Kontaktmoduls 12b. Die Positionierungserfassungseinheit 16b erkennt mittels des Bewegungssensors 42b eine Abweichung einer Positionierung des Kontaktmoduls 12b von einer ordnungsgemäßen Positionierung des Kontaktmoduls 12b an dem Gargeschirr 14b, und zwar insbesondere ein Ablösen des Kontaktmoduls 12b von dem Gargeschirr 14b und/oder eine Abweichung des Kontaktmoduls 12b von einer ordnungsgemäßen Winkelorientierung und/oder eine Bewegung des Kontaktmoduls 12b und/oder ein Verkippen des Kontaktmoduls 12b.

In einem Betriebszustand detektiert die Positionierungserfassungseinheit 16b, insbesondere mittels des Bewegungssensors 42b, eine Abweichung einer Positionierung des Kontaktmoduls 12b von einer ordnungsgemäßen Positionierung des Kontaktmoduls 12b an dem Gargeschirr 14b anhand eines Betrags und/oder einer Richtung des von dem Bewegungssensor 42b detektierten Positionierungsparameters.

Fig. 11 zeigt einen Verlauf des Positionierungsparameters über einer Zeit. Auf einer Ordinatenachse 102b ist der Positionierungsparameter aufgetragen. Auf einer Abszissenachse 104b ist eine Zeit aufgetragen. Ein Verlauf 110b eines ersten Positionierungsteilparameters des Positionierungsparameters ist gestrichelt dargestellt. Ein Verlauf 114b eines zweiten Positionierungsteilparameters des Positionierungsparameters ist gepunktet dargestellt. Ein Verlauf 112b eines dritten Positionierungsteilparameters des Positionierungsparameters ist strichpunktiert dargestellt.

Ist das Kontaktmodul 12b in einer ordnungsgemäßen Positionierung des Kontaktmoduls 12b an dem Gargeschirr 14b angeordnet, nimmt der erste Positionierungsteilparameter des Positionierungsparameters einen Betrag von im Wesentlichen eins an. Der zweite Positionierungsteilparameter des Positionierungsparameters und der dritte Positionierungsteilparameter des Positionierungsparameters nehmen im Fall einer ordnungsgemäßen Positionierung des Kontaktmoduls 12b an dem Gargeschirr 14b einen Betrag von im Wesentlichen Null an.

Bei einem beliebigen Zeitpunkt 106b löst sich das Kontaktmodul 12b aus einer ordnungsgemäßen Positionierung des Kontaktmoduls 12b an dem Gargeschirr 14b und fällt insbesondere auf eine Aufstellplatte 32b. Die Positionierungserfassungseinheit 16b detektiert ein Lösen des Kontaktmoduls 12b aus einer ordnungsgemäßen Positionierung des Kontaktmoduls 12b an dem Gargeschirr 14b. Zu einem weiteren Zeitpunkt 108b, welcher zeitlich auf den beliebigen Zeitpunkt 106b folgt, schlägt das Kontaktmodul 12b auf einer Oberfläche der Aufstellplatte 32b auf. Die Positionierungserfassungseinheit 16b detektiert ein Aufschlagen des Kontaktmoduls 12b auf einer Oberfläche der Aufstellplatte 32b.

Im Anschluss an ein Aufschlagen des Kontaktmoduls 12b auf einer Oberfläche der Aufstellplatte 32b nimmt der zweite Positionierungsteilparameter des Positionierungsparameters einen Betrag von im Wesentlichen eins an. Der erste Positionierungsteilparameter des Positionierungsparameters und der dritte Positionierungsteilparameter des Positionierungsparameters nehmen im Anschluss an ein Aufschlagen des Kontaktmoduls 12b auf einer Oberfläche der Aufstellplatte 32b einen Betrag von im Wesentlichen Null an.

Die Positionierungserfassungseinheit 16b erkennt in einem Betriebszustand anhand einer Änderung eines Betrags und/oder einer Richtung des Positionierungsparameters eine Abweichung des Kontaktmoduls 12b aus einer ordnungsgemäßen Positionierung des Kontaktmoduls 12b an dem Gargeschirr 14b.

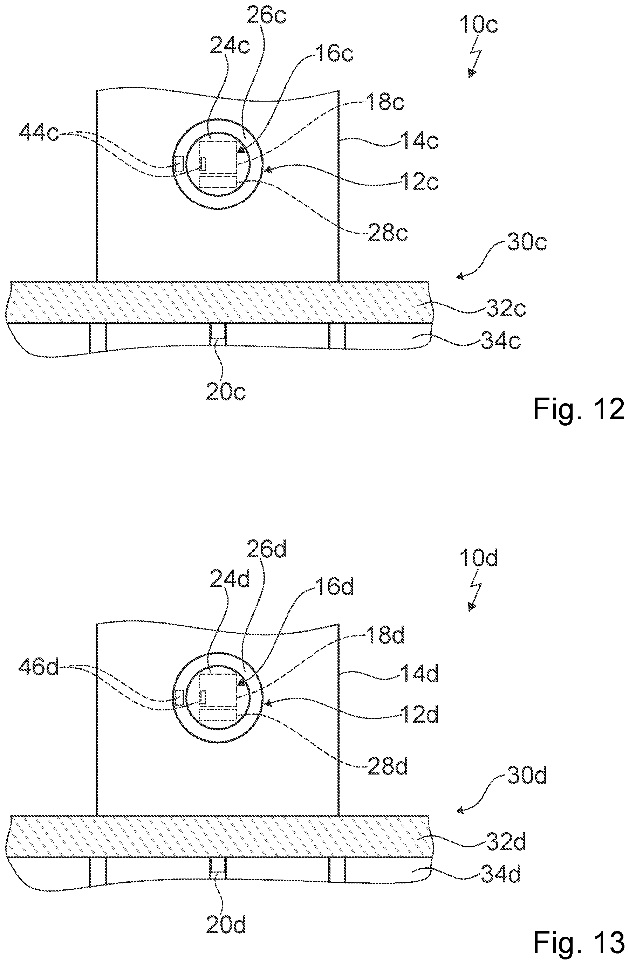

Fig. 12 zeigt einen Ausschnitt eines alternativen Garsystems 10c, welches ein Kontaktmodul 12c und ein Gargerät 30c aufweist. Das Kontaktmodul 12c weist ein erstes Kontaktmodulelement 24c und ein zweites Kontaktmodulelement 26c auf. In einem Betriebszustand überprüft eine Positionierungserfassungseinheit 16c des Garsystems 10c eine ordnungsgemäße Positionierung des Kontaktmoduls 12c an dem Gargeschirr 14c.

Die Positionierungserfassungseinheit 16c weist eine Sensoreinheit 18c auf, welche in einem Betriebszustand einen Positionierungsparameter detektiert. Die Sensoreinheit 18c ist Teil des Kontaktmoduls 12c. Im vorliegenden Ausführungsbeispiel weist die Sensoreinheit 18c einen magnetischen Sensor 44c auf. In einem Betriebszustand detektiert der magnetische Sensor 44c einen Positionierungsteilparameter des Positionierungsparameters. Der magnetische Sensor 44c ist teilweise Teil des ersten Kontaktmodulelements 24c. Der magnetische Sensor 44c ist teilweise Teil des zweiten Kontaktmodulelements 26c.

In einem Betriebszustand detektiert der magnetische Sensor 44c ein Abweichen einer ordnungsgemäßen Positionierung des ersten Kontaktmodulelements 24c des Kontaktmoduls 12c relativ zu dem zweiten Kontaktmodulelement 26c des Kontaktmoduls 12c. Der Positionierungsparameter ist ein Relativparameter des ersten Kontaktmodulelements 24c des Kontaktmoduls 12c relativ zu dem zweiten Kontaktmodulelement 26c des Kontaktmoduls 12c.

Beispielsweise könnte der Teil des magnetischen Sensors 44c, welcher insbesondere Teil des ersten Kontaktmodulelements 24c ist, ein Dauermagnet, insbesondere ein Ferromagnet, sein. Der Teil des magnetischen Sensors 44c, welcher insbesondere Teil des zweiten Kontaktmodulelements 26c ist, könnte beispielsweise ein Reedschalter sein. Dadurch kann insbesondere eine preisgünstige und/oder platzsparende Ausgestaltung erzielt werden.

Alternativ oder zusätzlich könnte der Teil des magnetischen Sensors 44c, welcher insbesondere Teil des ersten Kontaktmodulelements 24c ist, beispielsweise ein Dauermagnet, insbesondere ein Ferromagnet, sein. Der Teil des magnetischen Sensors 44c, welcher insbesondere Teil des zweiten Kontaktmodulelements 26c ist, könnte beispielsweise ein Hall-Sensor sein.

Der Teil des magnetischen Sensors 44c, welcher insbesondere Teil des ersten Kontaktmodulelements 24c ist, könnte alternativ oder zusätzlich beispielsweise ein Dauermagnet, insbesondere ein Ferromagnet, sein. Der Teil des magnetischen Sensors 44c, welcher insbesondere Teil des zweiten Kontaktmodulelements 26c ist, könnte beispielsweise ein Anisotropie-Sensor sein. Dadurch kann insbesondere eine präzise Überprüfung der ordnungsgemäßen Positionierung des Kontaktmoduls 12c an dem Gargeschirr 14c vorgenommen werden.

Fig. 13 zeigt einen Ausschnitt eines alternativen Garsystems 10d, welches ein Kontaktmodul 12d und ein Gargerät 30d aufweist. Das Kontaktmodul 12d weist ein erstes Kontaktmodulelement 24d und ein zweites Kontaktmodulelement 26d auf. In einem Betriebszustand überprüft eine Positionierungserfassungseinheit 16d des Garsystems 10d eine ordnungsgemäße Positionierung des Kontaktmoduls 12d an dem Gargeschirr 14d.

Die Positionierungserfassungseinheit 16d weist eine Sensoreinheit 18d auf, welche in einem Betriebszustand einen Positionierungsparameter detektiert. Die Sensoreinheit 18d ist Teil des Kontaktmoduls 12d. Im vorliegenden Ausführungsbeispiel weist die Sensoreinheit 18d einen kapazitiven Sensor 46d auf. In einem Betriebszustand detektiert der kapazitive Sensor 46d einen Positionierungsteilparameter des Positionierungsparameters. Der kapazitive Sensor 46d ist teilweise Teil des ersten Kontaktmodulelements 24d. Der kapazitive Sensor 46d ist teilweise Teil des zweiten Kontaktmodulelements 26d.

In einem Betriebszustand detektiert der kapazitive Sensor 46d ein Abweichen einer ordnungsgemäßen Positionierung des ersten Kontaktmodulelements 24d des Kontaktmoduls 12d relativ zu dem zweiten Kontaktmodulelement 26d des Kontaktmoduls 12d. Der Positionierungsparameter ist ein Relativparameter des ersten Kontaktmodulelements 24d des Kontaktmoduls 12d relativ zu dem zweiten Kontaktmodulelement 26d des Kontaktmoduls 12d Im vorliegenden Ausführungsbeispiel ist der Teil des kapazitiven Sensors 46d, welcher insbesondere Teil des ersten Kontaktmodulelements 24d ist, eine Kapazität, insbesondere ein Kondensator. Der Teil des kapazitiven Sensors 46d, welcher insbesondere Teil des zweiten Kontaktmodulelements 26d ist, ist ein Dauermagnet, insbesondere ein Ferromagnet.

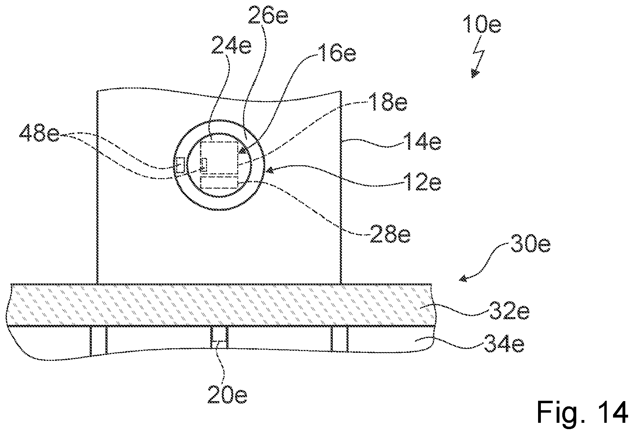

Fig. 14 zeigt einen Ausschnitt eines alternativen Garsystems 10e, welches ein Kontaktmodul 12e und ein Gargerät 30e aufweist. Das Kontaktmodul 12e weist ein erstes Kontaktmodulelement 24e und ein zweites Kontaktmodulelement 26e auf. In einem Betriebszustand überprüft eine Positionierungserfassungseinheit 16e des Garsystems 10e eine ordnungsgemäße Positionierung des Kontaktmoduls 12e an dem Gargeschirr 14e.

Die Positionierungserfassungseinheit 16e weist eine Sensoreinheit 18e auf, welche in einem Betriebszustand einen Positionierungsparameter detektiert. Die Sensoreinheit 18e ist Teil des Kontaktmoduls 12e. Im vorliegenden Ausführungsbeispiel weist die Sensoreinheit 18e einen Funksensor 48e auf. Der Funksensor 48e ist im vorliegenden Ausführungsbeispiel ein RFID-Sensor. In einem Betriebszustand detektiert der Funksensor 48d einen Positionierungsteilparameter des Positionierungsparameters. Der Funksensor 48e ist teilweise Teil des ersten Kontaktmodulelements 24e. Der Funksensor 48e ist teilweise Teil des zweiten Kontaktmodulelements 26e.

In einem Betriebszustand detektiert der Funksensor 48e ein Abweichen einer ordnungsgemäßen Positionierung des ersten Kontaktmodulelements 24e des Kontaktmoduls 12e relativ zu dem zweiten Kontaktmodulelement 26e des Kontaktmoduls 12e. Der Positionierungsparameter ist ein Relativparameter des ersten Kontaktmodulelements 24e des Kontaktmoduls 12e relativ zu dem zweiten Kontaktmodulelement 26d des Kontaktmoduls 12e.

Im vorliegenden Ausführungsbeispiel ist der Teil des Funksensors 48e, welcher insbesondere Teil des ersten Kontaktmodulelements 24e ist, ein RFID-Lesegerät. Der Teil des Funksensors 48e, welcher insbesondere Teil des zweiten Kontaktmodulelements 26e ist, ist ein RFID-Transponder.

### Bezugszeichen

- 10: Garsystem
- 12: Kontaktmodul
- 14: Gargeschirr
- 16: Positionierungserfassungseinheit
- 18: Sensoreinheit
- 20: Weitere Sensoreinheit
- 22: Zeitgeber
- 24: Erstes Kontaktmodulelement
- 26: Zweites Kontaktmodulelement
- 28: Temperaturerfassungseinheit
- 30: Gargerät
- 32: Aufstellplatte
- 34: Heizeinheit
- 36: Bedienerschnittstelle
- 38: Gargeräte-Steuereinheit
- 40: Temperatursensor
- 42: Bewegungssensor
- 44: Magnetischer Sensor
- 46: Kapazitiver Sensor
- 48: Funksensor
- 50: Steuereinheit
- 52: Detektionsschritt
- 54: Vergleichsschritt
- 56: Entscheidungsschritt
- 58: Überprüfungsschritt
- 60: Sicherheitsschritt
- 62: Weiterer Detektionsschritt
- 64: Weiterer Vergleichsschritt
- 66: Weiterer Entscheidungsschritt
- 68: Deaktivierungsschritt
- 70: Ordinatenachse
- 72: Abszissenachse
- 74: Ordinatenachse
- 76: Abszissenachse
- 78: Ordinatenachse
- 80: Abszissenachse
- 82: Ordinatenachse
- 84: Abszissenachse
- 86: Ordinatenachse
- 88: Abszissenachse
- 90: Zeitpunkt
- 92: Zeitpunkt
- 94: Zeitpunkt
- 96: Zeitpunkt
- 98: Zeitspanne
- 100: Zeitpunkt
- 102: Ordinatenachse
- 104: Abszissenachse
- 106: Zeitpunkt
- 108: Zeitpunkt
- 110: Verlauf
- 112: Verlauf
- 114: Verlauf

## Patentansprüche

1. Garsystem mit zumindest einem Kontaktmodul (12a-e), welches zu einer Anordnung an zumindest einem Gargeschirr (14a-e) vorgesehen ist, und mit zumindest einer Positionierungserfassungseinheit (16a-e), welche dazu vorgesehen ist, eine ordnungsgemäße Positionierung des Kontaktmoduls (12a-e) an dem Gargeschirr (14a-e) zu überprüfen, **dadurch gekennzeichnet, dass** die Positionierungserfassungseinheit (16a-e) dazu vorgesehen ist, im Fall einer Detektion einer Abweichung der Position des Kontaktmoduls (12a-e) von einer Sollposition zumindest eine Sicherheitsmaßnahme einzuleiten.

2. Garsystem nach Anspruch 1, **dadurch gekennzeichnet, dass** die Positionierungserfassungseinheit (16a-e) zumindest eine Sensoreinheit (18a-e) aufweist, welche wenigstens teilweise Teil des Kontaktmoduls (12a-e) ist und welche dazu vorgesehen ist, zumindest einen Positionierungsparameter zu detektieren.

3. Garsystem nach Anspruch 2, **dadurch gekennzeichnet, dass** die Sensoreinheit (18a) zumindest einen Temperatursensor (40a) aufweist, welcher dazu vorgesehen ist, zumindest einen Positionierungsteilparameter des Positionierungsparameters zu detektieren.

4. Garsystem nach Anspruch 2 oder 3, **dadurch gekennzeichnet, dass** die Sensoreinheit (18b) zumindest einen Bewegungssensor (42d) aufweist, welcher dazu vorgesehen ist, zumindest einen Positionierungsteilparameter des Positionierungsparameters zu detektieren.

5. Garsystem nach einem der Ansprüche 2 bis 4, **dadurch gekennzeichnet, dass** die Sensoreinheit (18c) zumindest einen magnetischen Sensor (44c) aufweist, welcher dazu vorgesehen ist, zumindest einen Positionierungsteilparameter des Positionierungsparameters zu detektieren.

6. Garsystem nach einem der Ansprüche 2 bis 5, **dadurch gekennzeichnet, dass** die Sensoreinheit (18d) zumindest einen kapazitiven Sensor (46d) aufweist, welcher dazu vorgesehen ist, zumindest einen Positionierungsteilparameter des Positionierungsparameters zu detektieren.

7. Garsystem nach einem der Ansprüche 2 bis 6, **dadurch gekennzeichnet, dass** die Sensoreinheit (18e) zumindest einen Funksensor (48e), insbesondere zumindest einen Funkempfänger, aufweist, welcher dazu vorgesehen ist, zumindest einen Positionierungsteilparameter des Positionierungsparameters zu detektieren.

8. Garsystem nach einem der Ansprüche 2 bis 7, **dadurch gekennzeichnet, dass** die Positionierungserfassungseinheit (16a-e) zumindest eine weitere Sensoreinheit (20a-e) aufweist, welche dazu vorgesehen ist, zumindest einen Kontrollparameter zu einer Überprüfung des Positionierungsparameters zu detektieren.

9. Garsystem nach einem der Ansprüche 2 bis 8, **dadurch gekennzeichnet, dass** die Positionierungserfassungseinheit (16a-e) zumindest einen Zeitgeber (22a-e) aufweist und dazu vorgesehen ist, im Fall einer Abweichung des Positionierungsparameters von zumindest einem Referenzwert den Positionierungsparameter nach einer vordefinierten Zeit erneut zu überprüfen.

10. Garsystem nach einem der Ansprüche 2 bis 9, **dadurch gekennzeichnet, dass** der Positionierungsparameter eine Gartemperatur und/oder ein Relativparameter zumindest eines ersten Kontaktmodulelements (24a-e) des Kontaktmoduls (12a-e) relativ zu zumindest einem zweiten Kontaktmodulelement (26a-e) des Kontaktmoduls (12a-e) ist.

11. Garsystem nach einem der vorhergehenden Ansprüche, **dadurch gekennzeichnet, dass** das Kontaktmodul (12a-e) zumindest eine Temperaturerfassungseinheit (28a-e) aufweist, welche dazu vorgesehen ist, zumindest einen Garparameter zu detektieren.

12. Garsystem nach Anspruch 11, **dadurch gekennzeichnet, dass** die Positionierungserfassungseinheit (16a) dazu vorgesehen ist, eine Abweichung einer Positionierung des Kontaktmoduls (12a) von einer Sollposition von einer Schwankung des Garparameters aufgrund einer Bedienereinwirkung zu unterscheiden.

13. Verfahren zu einem Betrieb eines Garsystems (10a-e), nach einem der Ansprüche 1 bis 12, mit zumindest einem Kontaktmodul (12a-e), welches zu einer Anordnung an zumindest einem Gargeschirr (14a-e) vorgesehen ist, wobei eine ordnungsgemäße Positionierung des Kontaktmoduls (12a-e) an dem Gargeschirr (14a-e) automatisch überprüft wird, **dadurch gekennzeichnet, dass** im Fall einer Detektion einer Abweichung der Position des Kontaktmoduls (12a-e) von einer Sollposition zumindest eine Sicherheitsmaßnahme eingeleitet wird.

## Claims

1. Cooking system with at least one contact module (12a-e), which is provided for arrangement on at least one item of cookware (14a-e) and with at least one positioning detection unit (16a-e) which is provided to check a correct positioning of the contact module (12a-e) on the item of cookware (14a-e), **characterised in that** the positioning detection unit (16a-e) is provided to introduce at least one safety measure in the case that a variation in the position of the contact module (12a-e) from a target position is detected.

2. Cooking system according to claim 1, **characterised in that** the positioning detection unit (16a-e) has at least one sensor unit (18a-e) which is at least partially part of the contact module (12a-e) and which is provided to detect at least one positioning parameter.

3. Cooking system according to claim 2, **characterised in that** the sensor unit (18a) has at least one temperature sensor (40a) which is provided to detect at least one positioning part parameter of the positioning parameter.

4. Cooking system according to claim 2 or 3, **characterised in that** the sensor unit (18b) has at least one motion sensor (42d), which is provided to detect at least one positioning part parameter of the positioning parameter.

5. Cooking system according to one of claims 2 to 4, **characterised in that** the sensor unit (18c) has at least one magnetic sensor (44c) which is provided to detect at least one positioning part parameter of the positioning parameter.

6. Cooking system according to one of claims 2 to 5, **characterised in that** the sensor unit (18d) has at least one capacitive sensor (46d) which is provided to detect at least one positioning part parameter of the positioning parameter.

7. Cooking system according to one of claims 2 to 6, **characterised in that** the sensor unit (18e) has at least one radio sensor (48e), in particular at least one radio receiver, which is provided to detect at least one positioning part parameter of the positioning parameter.

8. Cooking system according to one of claims 2 to 7, **characterised in that** the positioning detection unit (16a-e) has at least one further sensor unit (20a-e) which is provided to detect at least one control parameter for checking the positioning parameter.

9. Cooking system according to one of claims 2 to 8, **characterised in that** the positioning detection unit (16a-e) has at least one timer (22a-e), and is provided to check the positioning parameter again after a predetermined time in the case of a variation in the positioning parameter from at least one reference value.

10. Cooking system according to one of claims 2 to 9, **characterised in that** the positioning parameter is a cooking temperature and/or a relative parameter of a least one first contact module element (24a-e) of the contact module (12a-e) relative to at least one second contact module element (26a-e) of the contact module (12a-e).

11. Cooking system according to one of the preceding claims, **characterised in that** the contact module (12a-e) has at least one temperature detection unit (28a-e) which is provided to detect at least one cooking parameter.

12. Cooking system according to claim 11, **characterised in that** the positioning detection unit (16a) is provided to differentiate a variation in a positioning of the contact module (12a) from a target position from a fluctuation in the cooking parameter due to an operator effect.

13. Method for operating a cooking system (10a-e) according to one of claims 1 to 12, having at least one contact module (12a-e) which is provided for arrangement on at least one item of cookware (14a-e), wherein a correct positioning of the contact module (12a-e) on the item of cookware (14a-e) is checked automatically, **characterised in that** if a variation in the position of the contact module (12a-e) from a target position is detected, at least one safety measure is introduced.

## Revendications

1. Système de cuisson avec au moins un module de contact (12a-e), prévu afin d'être disposé sur au moins un élément de batterie de cuisine (14a-e) et avec au moins une unité de saisie de positionnement (16a-e), laquelle est prévue afin de vérifier un positionnement correct du module de contact (12a-e) sur l'élément de batterie de cuisine (14a-e), **caractérisé en ce que** l'unité de saisie de positionnement (16a-e) est prévue afin de déclencher au moins une mesure de sécurité en cas de détection d'une divergence de la position du module de contact (12a-e) par rapport à une position de consigne.

2. Système de cuisson selon la revendication 1, **caractérisé en ce que** l'unité de saisie de positionnement (16a-e) présente au moins une unité de capteurs (18a-e), laquelle fait au moins partiellement partie du module de contact (12a-e) et laquelle est prévue afin de détecter au moins un paramètre de positionnement.

3. Système de cuisson selon la revendication 2, **caractérisé en ce que** l'unité de capteurs (18a) présente au moins un capteur de température (40a), lequel est prévu afin de détecter au moins un paramètre de positionnement partiel du paramètre de positionnement.

4. Système de cuisson selon la revendication 2 ou 3, **caractérisé en ce que** l'unité de capteurs (18b) présente au moins un capteur de mouvement (42d), lequel est prévu afin de détecter au moins un paramètre de positionnement partiel du paramètre de positionnement.

5. Système de cuisson selon l'une des revendications 2 à 4, **caractérisé en ce que** l'unité de capteurs (18c) présente au moins un capteur magnétique (44c), lequel est prévu afin de détecter au moins un paramètre de positionnement partiel du paramètre de positionnement.

6. Système de cuisson selon l'une des revendications 2 à 5, **caractérisé en ce que** l'unité de capteurs (18d) présente au moins un capteur capacitif (46d), lequel est prévu afin de détecter au moins un paramètre de positionnement partiel du paramètre de positionnement.

7. Système de cuisson selon l'une des revendications 2 à 6, **caractérisé en ce que** l'unité de capteurs (18e) présente au moins un capteur radioélectrique (48e), en particulier au moins un récepteur radioélectrique, lequel est prévu afin de détecter au moins un paramètre de positionnement partiel du paramètre de positionnement.

8. Système de cuisson selon l'une des revendications 2 à 7, **caractérisé en ce que** l'unité de saisie de positionnement (16a-e) présente au moins une unité de capteurs supplémentaire (20a-e), laquelle est prévue afin de détecter au moins un paramètre de commande pour une vérification du paramètre de positionnement.

9. Système de cuisson selon l'une des revendications 2 à 8, **caractérisé en ce que** l'unité de saisie de positionnement (16a-e) présente au moins un temporisateur (22a-e) et est prévue afin de vérifier à nouveau le paramètre de positionnement après une durée prédéfinie dans le cas d'une divergence du paramètre de positionnement selon au moins une valeur de référence.

10. Système de cuisson selon l'une des revendications 2 à 9, **caractérisé en ce que** le paramètre de positionnement est une température de cuisson et/ou un paramètre relatif d'au moins un premier élément de module de contact (24a-e) du module de contact (12a-e) par rapport à au moins un deuxième élément de module de contact (26a-e) du module de contact (12a-e).

11. Système de cuisson selon l'une des revendications précédentes, **caractérisé en ce que** le module de contact (12a-e) présente au moins une unité de saisie de température (28a-e) prévue afin de détecter au moins un paramètre de cuisson.

12. Système de cuisson selon la revendication 11, **caractérisé en ce que** l'unité de saisie de positionnement (16a) est prévue afin de différencier une divergence d'un positionnement du module de contact (12a) par rapport à une position de consigne d'une fluctuation du paramètre de cuisson en raison d'une action menée par l'utilisateur.

13. Procédé d'exploitation d'un système de cuisson (10a-e) selon l'une des revendications 1 à 12, avec au moins un module de contact (12a-e), prévu afin d'être disposé sur au moins un élément de batterie de cuisine (14a-e), dans lequel un positionnement correct du module de contact (12a-e) sur l'élément de batterie de cuisine (14a-e) est automatiquement vérifié, **caractérisé en ce qu'**au moins une mesure de sécurité est déclenchée en cas de détection d'une divergence de la position du module de contact (12a-e) par rapport à une position de consigne.
